# EUROPÄISCHE PATENTSCHRIFT

(11) **EP 3 278 978 B1**
(45) Veröffentlichungstag und Bekanntmachung des Hinweises auf die Patenterteilung: **19.06.2019**
(21) Anmeldenummer: 16182620.1
(22) Anmeldetag: 03.08.2016
(51) Int. Cl.: B32B 15/04, B32B 37/06

(54) **VERFAHREN ZUR HERSTELLUNG VON ZUMINDEST ZWEILAGIGEN SCHAUMSTOFFPLATTEN UNTER VERWENDUNG MINDESTENS EINER DÜNNEREN SCHAUMSTOFFPLATTE MIT METALLDECKSCHICHTEN**
METHOD FOR PRODUCING AT LEAST TWO-LAYER FOAM PANELS USING AT LEAST ONE THIN FOAMED PANEL WITH METAL CAPS
PROCEDE DE FABRICATION DE PLAQUES DE MOUSSE D'AU MOINS DEUX COUCHES A L'AIDE D'AU MOINS UNE PLAQUE DE MOUSSE PLUS FINE COMPRENANT DES COUCHES DE SURFAÇAGE EN METAL

(43) Veröffentlichungstag der Anmeldung: 07.02.2018
(73) Patentinhaber: BASF SE, 67056 Ludwigshafen am Rhein (DE)
(72) Erfinder: Merkel, Peter, 67308 Zellertall (DE); Hahn, Christoph Oliver, 67454 Hassloch (DE); Diehlmann, Tim, 67283 Obrigheim-Colgenstein (DE); Dietzen, Franz-Josef, 67454 Hassloch (DE); Kiciak, Thomas, 67071 Ludwigshafen (DE)
(74) Vertreter: BASF IP Association

(56) Entgegenhaltungen:
- EP-A1- 2 529 916
- WO-A1-2009/077616
- WO-A1-2011/106901

## Beschreibung

Die vorliegende Erfindung betrifft ein Verfahren zur Herstellung von zumindest zweilagigen Schaumstoffplatten durch Verbinden von mindestens einer dünneren thermoplastischen Schaumstoffplatte (TS) und mindestens einer dünneren Schaumstoffplatte (NS) als Ausgangsplatten. Die dünnere Schaumstoffplatte (NS) weist an zwei sich gegenüberliegenden Seiten jeweils eine Metalldeckschicht auf, wobei eine Metalldeckschicht in der durch das erfindungsgemäße Verfahren erhaltenen zumindest zweilagigen Schaumstoffplatte nach dem Verbinden sich zwischen jeweils einer der beiden vorgenannten dünneren Ausgangsplatten (TS) und (NS) befindet. Die dünnere Schaumstoffplatte (NS) kann eine thermoplastische oder eine nichtthermoplastische Schaumstoffplatte, beispielsweise eine duroplastische Schaumstoffplatte, sein. Weiterhin betrifft die vorliegende Erfindung die zumindest zweilagige Schaumstoffplatte als solche sowie deren Verwendung zur Wärmedämmung.

Die Anzahl der Lagen der zumindest zweilagigen Schaumstoffplatte als solche ergibt sich aus der Anzahl der dünneren Schaumstoffplatten (NS) und (TS), die miteinander verbunden, vorzugsweise thermisch miteinander verschweißt, werden. Wenn beispielsweise drei dünnere Schaumstoffplatten miteinander verbunden werden, wird eine dreilagige Schaumstoffplatte als solche erhalten, im Fall von vier dünneren Schaumstoffplatten ergibt sich demzufolge eine vierlagige Schaumstoffplatte als solche.

Das Dokument D1 = WO-A-2011/106901 offenbart eine mehrlagige Schaumstoffplatte, wobei die Schaumstoffe unterschiedlich sein dürfen, also sowohl duroplastisch als auch thermoplastisch.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die EB15-2047EP 3. August 2016 Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 41 sind jedoch keine Angaben enthalten, wie anstelle einer Verklebung die Verschweißung der Ausgangsplatten konkret durchgeführt werden kann.

DE-A 44 21 016 offenbart ein Verfahren zur Herstellung von CO₂ -geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

WO 2015/011016 betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei diesem Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Dabei werden entweder zwei Heizelemente aus jeweils zueinander entgegengesetzten Richtungen in den Zwischenraum zwischen die beiden Ausgangsplatten eingeführt und/oder die zwei Heizelemente werden in jeweils zueinander entgegengesetzten Richtungen aus diesem Zwischenraum wieder entfernt.

Die internationale Anmeldung PCT/EP2015/080180 betrifft ein Verfahren zur Herstellung von zumindest zweilagigen thermoplastischen Platten durch thermisches Verschweißen von zumindest einer ersten dünneren thermoplastischen Platte mit einer Dichte (D1) und zumindest einer zweiten dünneren thermoplastischen Platte mit einer Dichte (D2), wobei die Dichte (D1) der ersten dünneren thermoplastischen Platte kleiner ist als die Dichte (D2) der zweiten dünneren thermoplastischen Platte. Bei dem Verfahren werden zumindest ein erstes Heizelement und zumindest ein zweites Heizelement auf zueinander versetzten Ebenen zwischen die beiden dünneren thermoplastischen Platten eingeführt, wobei sich die Oberflächen der dünneren thermoplastischen Platten die Oberflächen der Heizelemente nicht berühren. Das erste Heizelement überträgt eine Energiemenge (E1) auf die Oberfläche der ersten dünneren thermoplastischen Platte und das zweite Heizelement eine Energiemenge (E2) auf die Oberfläche der zweiten dünneren thermoplastischen Platte, wobei die Energiemenge (E1) kleiner ist als die Energiemenge (E2).

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. In EP-A 1 201 838 sind hingegen keine Angaben enthalten, ob es sich bei den jeweiligen Ausgangsplatten der mehrschichtigen Dämmplatte um thermoplastische oder nichtthermoplastische Platten handelt. Ebenso wenig ist dort offenbart, dass sich zwischen den einzelnen Ausgangsplatten auch Metalldeckschichten befinden können. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verschweißen von bereits fertigen Ausgangsplatten ist in EP-A 1 201 838 ebenfalls nicht beschrieben.

CH-A 706 454 betrifft eine Dämmplatte und ein Verfahren zur Herstellung einer Dämmplatte. Die Dämmplatte wird zur Wärmeisolation von Außenfassaden, Wänden oder anderen Teilen von Gebäuden verwendet und basiert auf expandiertem Polystyrol (EPS). Die Dämmplatte kann mehrteilig sein und umfasst eine EPS-Hauptplatte und zumindest eine Deckplatte, die auf der Vorder- oder Rückseite der Hauptplatte angeordnet ist. Die Hauptplatte ist in Folge athermaner Bestandteile, insbesondere Graphitpartikel, dunkel gefärbt, während die entsprechende Deckplatte, die ebenfalls auf EPS basiert, hell bis weiß erscheint, was durch die Zugabe anderer atherman wirkender Stoffe, insbesondere Titandioxid, erzielt wird. Die einzelnen Ausgangsplatten der Dämmplatte können auf beliebige Weise miteinander verbunden werden, beispielsweise durch thermisches Verschweißen, durch Quellschweißen (unter Verwendung eines Lösungsmittels) oder unter Verwendung eines Klebstoffs. In CH-A 706 454 wird jedoch nicht offenbart, dass außer auf expandiertem Polystyrol (EPS) basierten Ausgangsplatten auch andere Ausgangsplatten verwendet werden können.

Die der vorliegenden Erfindung zugrunde liegende Aufgabe besteht in der Bereitstellung eines neuen Verfahrens zur Herstellung von zumindest zweilagigen Schaumstoffplatten bzw. in den zumindest zweilagigen Schaumstoffplatten als solchen, wobei diese Platten sich durch niedrige Wärmeleitfähigkeit und gute Verarbeitbarkeit auszeichnen sollen.

Gelöst wird die Aufgabe durch ein Verfahren zur Herstellung einer zumindest zweilagigen Schaumstoffplatte durch Verbinden von mindestens einer dünneren thermoplastischen Schaumstoffplatte (TS) und mindestens einer dünneren Schaumstoffplatte (NS), wobei die dünnere Schaumstoffplatte (NS) an zwei sich gegenüberliegenden Seiten jeweils eine Metalldeckschicht aufweist und wobei die dünnere thermoplastische Schaumstoffplatte (TS) und die dünnere Schaumstoffplatte (NS) so miteinander verbunden werden, dass in der zumindest zweilagigen Schaumstoffplatte sich eine Metalldeckschicht zwischen der dünneren thermoplastischen Schaumstoffplatte (TS) und der dünneren Schaumstoffplatte (NS) befindet und wobei das Verbinden der dünneren thermoplastischen Schaumstoffplatte (TS) und der dünneren Schaumstoffplatte (NS) durch thermisches Verschweissen erfolgt.

Die mit dem erfindungsgemäßen Verfahren hergestellten zumindest zweilagigen Schaumstoffplatten zeichnen sich dadurch aus, dass die vorteilhaften Eigenschaften der einzelnen Ausgangsplatten miteinander kombiniert werden können, sodass zwei-oder mehrlagige Schaumstoffplatten mit auf das jeweilige Anforderungsprofil maßgeschneiderten Materialeigenschaften bereitgestellt werden können.

Schaumstoffplatten, die mit Metalldeckschichten versehen sind, werden auch als "kaschierte Schaumstoffplatten" bezeichnet. Im Rahmen der vorliegenden Erfindung weist die dünnere Schaumstoffplatte (NS) an zwei sich gegenüberliegenden Seiten jeweils eine Metalldeckschicht auf, die dünnere Schaumstoffplatte (NS) ist somit eine kaschierte Schaumstoffplatte. Voraussetzung ist, dass die dünnere Schaumstoffplatte (NS) an mindestens zwei sich gegenüberliegenden Seiten eine solche Metalldeckschicht aufweist. Gegebenenfalls können solche Metalldeckschichten auch noch auf weiteren Seiten der dünneren Schaumstoffplatte (NS) aufgebracht sein, wobei sich diese weiteren Seiten nicht zwingend gegenüberliegen müssen.

Durch die Kaschierung, die vorzugsweise diffusionsdicht ist, wird insbesondere bewirkt, dass in den jeweiligen Schaumstoffplatten vorhandenes Treibmittel am Ausdiffundieren (möglichst vollständig) gehindert bzw. dieser Diffusionsprozess deutlich verzögert wird. Dabei ist es nicht zwingend erforderlich, dass alle Seiten der dünneren Schaumstoffplatte (NS) mit einer solchen Kaschierung, also einer Metalldeckschicht, versehen sind, weil über das gesamte Plattenvolumen gesehen der Weg für die Hauptmenge des in der jeweiligen Platte, insbesondere in den Poren, enthaltenen Treibmittels zu weiter entfernten, nicht kaschierten Seiten zu weit ist, so dass das Treibmittel größtenteils durch die Metalldeckschicht in den Poren zurückgehalten wird.

Vorzugsweise sind die Metalldeckschichten demzufolge auf den beiden flächenmäßig größten sich gegenüberliegenden Seiten der dünneren Schaumstoffplatte (NS) aufgebracht. Das Ausdiffundieren von Treibmittel aus nichtkaschierten Seiten der dünneren Schaumstoffplatte (NS) ist insbesondere dann vernachlässigbar, wenn die entsprechenden Seiten flächenmäßig kleiner als die kaschierten Seiten sind. Gegebenenfalls können aber auch diese Seiten mit Metalldeckschichten oder sonstigen Schutzschichten, zum Beispiel Epoxidharzschutzschichten, versehen werden, um auch ein Ausdiffundieren des Treibmittels an den Randbereichen der entsprechenden Schaumstoffplatte (vollständig) zu verhindern bzw. (weiter) zu verzögern.

Diese zwei- oder mehrlagigen Schaumstoffplatten zeichnen sich insbesondere durch niedrige Wärmeleitfähigkeit und/oder eine gute Verarbeitbarkeit aus.

So sind beispielsweise thermoplastische Schaumstoffplatten ohne (weitgehend) diffusionsdichte Kaschierung in der Regel zur Wärmeisolation/Wärmedämmung aufgrund ihrer höheren Wärmeleitfähigkeiten (höherer Wärmeleitfähigkeitswert λ) weniger gut geeignet als beispielsweise Schaumstoffe mit einer vorzugsweise diffusionsdichten Kaschierung, da bei diesen die eingesetzten Treibmittel mit vorzugsweise niedriger Wärmeleitfähigkeit nicht hinausdiffundieren können. Als diffusionsdichte Kaschierung wird vorzugsweise Aluminium, beispielsweise in Form von Aluminiumfolie, verwendet.

Durch die Kaschierung mit Deckschichten sind die jeweiligen Schaumstoffplatten aber schlecht zu verarbeiten, da die Haftung von zum Beispiel Verputzen auf diesen Metalldeckschichten sehr schlecht ist.

Im Gegensatz dazu können thermoplastische Schaumstoffplatten ohne Kaschierung gut verarbeitet werden, wodurch deren Anwendung beispielsweise im Bauwesen sehr vorteilhaft ist, weil diese Platten über eine gute Anhaftung an Putz oder sonstigen Beschichtungen verfügen. Weiterhin sind solche thermoplastischen Schaumstoffplatten auch besonders unempfindlich gegen Beschädigungen, wodurch auch eine Stabilisierung der zumindest zweilagigen Schaumstoffplatte erzielt wird.

Im Gegensatz dazu ist die Anhaftung von nichtthermoplastischen Schaumstoffplatten, insbesondere duroplastischen Schaumstoffplatten, wie Polyurethanhartschaumstoffen, die zudem über Metalldeckschichten verfügen, an Putz oder sonstigen Beschichtungen relativ schlecht. Die Wärmedämmungseigenschaften solcher Schaumstoffplatten, die zudem über Metalldeckschichten verfügen, sind hingegen deutlich besser als diejenigen der Schaumstoffplatten ohne Beschichtung.

Demzufolge können durch die vorliegende Erfindung auf einfache Weise zumindest zweilagige Schaumstoffplatten bereitgestellt werden, die als Dämmmaterialien mit niedrigen Wärmeleitfähigkeiten eingesetzt werden können und die zudem die von Standardschaumstoffen bekannten Eigenschaften, wie gute Putzhaftung, mechanische Unempfindlichkeit, leichte Verarbeitbarkeit und/oder Verfügbarkeit in beliebigen Dicken aufweisen.

Sofern die erfindungsgemäßen zumindest zweilagigen Schaumstoffplatten durch thermisches Verschweißen hergestellt werden, ergeben sich darüber hinaus vorteilhafte Eigenschaften im Zusammenhang mit einer (verringerten) Brennbarkeit sowie dem Erfüllen von Brandtests.

Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größerer Dicke. Dieses unterschiedliche Brandverhalten ist in der Ausbildung der sogenannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102-1: 1998-05) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, sodass das entsprechende Produkt nicht stabil ist.

Die in einer bevorzugten Ausführungsform mit dem erfindungsgemäßen Verfahren durch thermisches Verschweißen hergestellten zumindest zweilagigen Schaumstoffplatten zeichnen sich folglich dadurch aus, dass die entsprechende Anzahl an dünneren thermoplastischen sowie kaschierten Schaumstoffplatten auf sehr stabile Weise zu den zumindest zweilagigen Schaumstoffplatten (Produkt) zusammengefügt werden kann, sofern dieses Zusammenfügen durch thermisches Verschweißen erfolgt. Die im erfindungsgemäßen Verfahren gebildeten Schweißnähte, die aufgrund des thermischen Verschweißens die einzelnen dünneren Schaumstoffplatten zu der zumindest zweilagigen Schaumstoffplatte miteinander verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist in dieser Ausführungsform von seinem Prinzip her ein sogenanntes "kontaktloses Verschweißen" (oder "berührungsloses Erhitzen"), da die Wärmeübertragung von den Heizelementen auf die zu verschweißenden Oberflächen der dünneren thermoplastischen bzw. kaschierten Schaumstoffplatten (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Schaumstoffplatten auswirken kann.

Aufgrund der Verwendung von mindestens zwei Heizelementen, die auf parallel zueinander versetzten Ebenen und ohne direkten Kontakt mit den zu verschweißenden Ausgangsplatten im Rahmen dieser Ausführungsform des erfindungsgemäßen Verfahrens eingesetzt werden, ist als weiterer Vorteil festzuhalten, dass die zu verschweißenden Oberflächen der Ausgangsplatten in einem weit geringerem Maße einer unterschiedlichen Wärmebelastung ausgesetzt sind im Vergleich zu Verfahren gemäß dem Stand der Technik. Bei der Verwendung von nur einem Heizelement, das gegebenenfalls auch zweigeteilt sein kann, aber wo die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige Schaumstoffplatten von beliebiger Dicke herstellen.

Ein weiterer Vorteil in einer Ausführungsform des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Schaumstoffoberfläche und dem Zusammenfügen der erhitzten bzw. aufgeschmolzenen Schaumstoffoberfläche verstreicht. Im erfindungsgemäßen Verfahren ist dies somit die Zeitspanne, die mit dem Einführen von wenigstens zwei Heizelemente gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Im Rahmen der vorliegenden Erfindung wird unter den Begriffen "Duroplast", "duroplastisches Aushärten" oder "duroplastische Schaumstoffplatte" folgendes verstanden. Duroplaste, auch Duromere genannt, sind erhältlich durch (duroplastisches) Aushärten der entsprechenden Ausgangsmaterialien. In der Regel enthalten die für die Herstellung eines Duroplasten durch duroplastisches Aushärten verwendeten Ausgangsmaterialien mindestens zwei unterschiedliche Komponenten. Die erste Komponente ist häufig ein Polymer oder gegebenenfalls die entsprechenden Monomere, aus denen das jeweilige Polymer gebildet werden kann. Die zweite Komponente wird auch als Vernetzer bezeichnet, sie reagiert chemisch mit der ersten Komponente, wodurch sie ein Vernetzen der ersten Komponente, vorzugsweise von Polymerketten, bewirkt. Die Vernetzung erfolgt vorzugsweise dreidimensional. Die Duroplaste bilden somit nach dem Aushärtungsvorgang eine stabile Struktur aus, die nicht oder nur sehr schwer verformt werden kann. Duroplastische Schaumstoffplatten sind folglich Schaumstoffe in Plattenform, die über die vorgenannten Polymereigenschaften eines Duroplasten verfügen.

Im Rahmen der vorliegenden Erfindung wird unter den Begriffen "Thermoplast" oder "thermoplastische Schaumstoffplatte" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffe sind folglich Schaumstoffplatten in Plattenform, die über die vorgenannten Polymereigenschaften eines Thermoplasts verfügen.

Nachfolgend wird das erfindungsgemäße Verfahren zur Herstellung einer zumindest zweilagigen Schaumstoffplatte sowie die zumindest zweilagige Schaumstoffplatte als solche näher definiert.

Die mit dem erfindungsgemäßen Verfahren hergestellte Schaumstoffplatte (Platte) ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der Platte als solche aus der Anzahl der dünneren Platten (TS) und (NS), die miteinander verbunden, vorzugsweise miteinander thermisch verschweißt werden. Die dünneren Platten werden auch als Ausgangsplatten bezeichnet. Im Falle einer zweilagigen Schaumstoffplatte als solche werden also zwei dünnere Platten, eine erste dünnere thermoplastische Platte und eine zweite dünnere Platte, die ebenfalls eine thermoplastische Platte, aber auch eine nichtthermoplastische Platte, insbesondere eine duroplastische Platte, sein kann, miteinander verbunden, vorzugsweise thermisch verschweißt. Bei einer drei- oder vierlagigen Platte als solche werden somit drei- bzw. vier dünnere Platten miteinander verbunden, insbesondere thermisch verschweißt.

Sofern noch höherlagige Platten als solche hergestellt werden sollen, beispielsweise eine zehnlagige Platte, müssen demzufolge die der Anzahl der Lagen entsprechende Anzahl an dünneren Platten (TS) und (NS), beispielsweise zehn dünnere Platten, miteinander verbunden werden. Vorzugsweise ist die erfindungsgemäße Platte zweilagig, dreilagig oder vierlagig, insbesondere ist die erfindungsgemäße Platte dreiliagig. Das Verbinden, insbesondere das thermische Verschweißen als solches (Durchführung), wird weiter unten im Text im Zusammenhang mit dem erfindungsgemäßen Herstellungsverfahren näher definiert.

Voraussetzung bei jeder zumindest zweilagigen Schaumstoffplatte, die nach dem erfindungsgemäßen Verfahren hergestellt wird, ist, dass in der entsprechenden Anzahl an Lagen (also die konkrete Anzahl an dünneren Ausgangsplatten (NS) und (TS)) immer mindestens eine dünnere thermoplastische Schaumstoffplatte (TS) und mindestens eine dünnere Schaumstoffplatte (NS) als Ausgangsplatten verwendet werden. Während die dünnere Ausgangsplatte (TS) zwingend thermoplastisch ist, ist dies für die dünnere Ausgangspatte (NS) nicht erforderlich. Die dünnere Schaumstoffplatte (NS) kann sowohl thermoplastisch als auch nichtthermoplastisch sein. Allerdings weist die dünnere Schaumstoffplatte (NS) an zwei sich gegenüberliegenden Seiten jeweils eine Metalldeckschicht auf. Jede dünnere Schaumstoffplatte (NS) weist somit zwingend mindestens zwei Metalldeckschichten auf. Gegebenenfalls können auch mehr als zwei Seiten der entsprechenden Ausgangsplatte über eine entsprechende Metalldeckschicht verfügen, maximal also alle sechs Seiten der entsprechenden Ausgangsplatte.

Erfindungsgemäß werden die an den jeweiligen Ausgangsplatten (NS) zwingend vorhandenen mindestens zwei Metalldeckschichten nicht bei der Festlegung/Definition der Anzahl der Lagen mitberücksichtigt. Die Anzahl der Lagen in einer zumindest zweilagigen Schaumstoffplatte ergibt sich somit nur aus der Anzahl der dabei eingesetzten dünneren Ausgangsplatten (NS) und (TS). Erfindungsgemäß ist es bevorzugt, dass bei drei- oder höherlagigen Schaumstoffplatten immer abwechselnd eine dünnere thermoplastische Ausgangsplatte (TS) und eine dünnere Ausgangsplatte (NS) bei der entsprechenden Herstellung eingesetzt werden. Im Fall von einer ungeraden Anzahl an Lagen (beispielsweise dreilagig oder fünflagig) ist es weiterhin bevorzugt, dass die Anzahl an thermoplastischen Ausgangsplatten (TS) um eins höher ist als die entsprechende Anzahl der dünneren Ausgangsplatten (NS).

In einer bevorzugten Ausführungsform der Erfindung wird eine dreilagige Schaumstoffplatte hergestellt durch Verbinden, vorzugsweise durch thermisches Verschweißen von zwei dünneren thermoplastischen Schaumstoffplatten (TS) und einer dünneren Schaumstoffplatte (NS), die an zwei sich gegenüberliegenden Seiten jeweils eine Metalldeckschicht aufweist, wobei jeweils eine dünnere thermoplastische Schaumstoffplatte (TS) auf jeweils einer sich gegenüberliegenden Seite der dünneren Schaumstoffplatte (NS) unter Erhalt der dreilagigen Schaumstoffplatte aufgebracht wird, und sich jeweils eine Metalldeckschicht zwischen der jeweiligen dünneren thermoplastischen Schaumstoffplatte (TS) und der dünneren Schaumstoffplatte (NS) befindet.

In einer weiteren bevorzugten Ausführungsform der vorliegenden Erfindung wird aus einer vorstehend beschriebenen dreilagigen Schaumstoffplatte eine vier- oder höherlagige Schaumstoffplatte (vorzugsweise durch thermisches Verschweißen), hergestellt. Dabei wird ausgehend von der vorstehend beschriebenen dreilagigen Schaumstoffplatte eine zweite dünnere Schaumstoffplatte (NS), die an zwei sich gegenüberliegenden Seiten jeweils eine Metalldeckschicht aufweist, auf eine von einer dünneren thermoplastischen Schaumstoffplatte (TS) stammenden Seite der dreilagigen Schaumstoffplatte aufgebracht, wobei die daraus erhaltene vierlagige Schaumstoffplatte abwechselnd insgesamt vier Lagen aus dünneren thermoplastischen Schaumstoffplatten (TS) und dünneren Schaumstoffplatten (NS) aufweist, sich jeweils eine Metalldeckschicht zwischen einer Lage aus dünnerer thermoplastischer Schaumstoffplatte (TS) und einer Lage aus dünnerer Schaumstoffplatte (NS) befindet, und die erste und zweite dünnere Schaumstoffplatte (NS) sich auf jeweils einer gegenüberliegenden Seite einer dünneren thermoplastischen Schaumstoffplatte (TS) befinden. Gegebenenfalls wird zum Erhalt von höherlagigen Schaumstoffplatten das abwechselnde Aufbringen einer weiteren dünneren thermoplastischen Schaumstoffplatte (TS) oder einer dünneren Schaumstoffplatte (NS), die an zwei sich gegenüberliegenden Seiten jeweils eine Metalldeckschicht aufweist, mindestens einfach wiederholt.

Die zum Verbinden verwendeten dünneren Ausgangsplatten (TS) und (NS) entsprechen hinsichtlich ihrer chemischen Zusammensetzung den im Rahmen der vorliegenden Erfindung hergestellten zumindest zweilagigen Platten als solche. Bei dieser Betrachtungsweise werden jedoch beispielsweise Klebstoffe, die bei einem etwaigen Verbinden der dünneren Ausgangsplatten durch Verkleben auf die jeweiligen Oberflächen der dünneren Ausgangsplatten aufgebracht werden, nicht berücksichtigt. Sinngemäßes gilt auch für etwaige sonstige auf die Oberflächen der Ausgangsplatten aufgebrachte Komponenten wie Absorber von elektromagnetischer Strahlung oder Flammschutzmittel. Ebenso wenig werden bei dieser Betrachtungsweise die bei einem Verbinden durch thermisches Verschweißen infolge der Ausbildung der Schweißnaht an den entsprechenden Oberflächen auftretenden chemischen Veränderungen/Reaktionen mitberücksichtigt. Die jeweils miteinander zu verbindenden, vorzugsweise thermisch zu verschweißenden, dünneren Ausgangsplatten weisen vorzugsweise dieselben Dimensionen auf. Vorzugsweise erfolgt das Verbinden an den jeweils flächenmäßig größten Seiten der jeweiligen Ausgangsplatten.

Die Dimensionierung der miteinander zu verbindenden dünneren Platten (TS) und (NS) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die dünneren Platten eine Dicke im Bereich von 5 bis 300 mm auf. Bei den Angaben zur Plattendicke ist im Fall einer dünneren Ausgangsplatte (NS) die Dicke der beiden Metalldeckschichten bei den vor- bzw. nachstehenden Angaben nicht berücksichtigt. Die Dicke dieser Metalldeckschichten kann zwar prinzipiell beliebig sein, vorzugsweise ist sie jedoch nur ein Bruchteil der Dicke der Platte (NS), vorzugsweise ist die Dicke der Metalldeckschicht < 1 mm, insbesondere < 0,1 mm.

Bezogen auf ein rechtwinkliges Koordinatensystem wird erfindungsgemäß die Länge einer Ausgangsplatte bzw. einer zumindest zweilagigen Platte als solche auch als "x-Richtung" bezeichnet, die entsprechende breite als "y-Richtung" und die Dicke als "z-Richtung". Die Dicke der zumindest zweilagigen Platte steigt mit zunehmender Anzahl von verbundenen Ausgangsplatten kontinuierlich an.

Die vorstehend bzw. nachfolgend angegebenen Werte hinsichtlich der Dicke der dünneren Platten (TS) und (NS) beziehen sich auf die entsprechenden Werte einer Ausgangsplatte, die für sich genommen noch keinen Verbindungsschritt, insbesondere keinen thermischen Verschweißungsschritt, erfahren hat.

Die Dicke der im erfindungsgemäßen Verfahren hergestellten zumindest zweilagigen Platten ergibt sich somit aus der Gesamtdicke der insgesamt eingesetzten dünneren Platten (Ausgangsplatten) sowie der diesbezüglich aber vernachlässigbaren Dicke der Metalldeckschichten. Bei der Ausführungsform des thermischen Verschweißens werden die jeweils miteinander zu verschweißenden Oberflächen der Ausgangsplatten zumindest etwas auf- oder angeschmolzen (Aufschmelzschritt), was in Abhängigkeit von den übertragenen Energiemengen zu einer gewissen Reduzierung der Dicke der jeweiligen Ausgangsplatten führen kann. Dies kann insbesondere auf die dünnere thermoplastische Ausgangsplatte (TS) zutreffen, während bei der Ausgangsplatte (NS) die mit einer Metalldeckschicht kaschierte und somit relativ hitzeunempfindliche Seite der entsprechenden Ausgangsplatte der Hitzequelle beim thermischen Schweißen direkt (mit oder ohne Kontakt) ausgesetzt ist. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit der Übertragung einer großen Energiemenge durchgeführt wird, ist die Dicke der zumindest zweilagigen Platte als solche geringer als die Summe der jeweiligen Dicken der eingesetzten Ausgangsplatten. Sinngemäßes gilt auch bei Verpressen von miteinander verklebten Ausgangsplatten.

Vorzugsweise weist die mindestens eine dünnere thermoplastische Schaumstoffplatte (TS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 2 bis 100 mm, vorzugsweise von 5 bis 50 mm, auf.

Vorzugsweise weist die dünnere Schaumstoffplatte (NS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 20 bis 200 mm, vorzugsweise von 40 bis 160 mm, auf.

Weiterhin ist es bevorzugt, dass jede Metalldeckschicht eine Länge (x-Richtung) und eine Breite (y-Richtung) aufweist, die identisch ist mit den entsprechenden Werten der dünneren Schaumstoffplatte (NS), die Dicke (z-Richtung) jedoch 0,01 bis 0,1 mm, vorzugsweise 0,02 bis 0,06 mm, beträgt.

Weiterhin ist es bevorzugt, dass jede dünnere thermoplastische Schaumstoffplatte (TS), jede dünnere Schaumstoffplatte (NS) und jede Metalldeckschicht identische Werte für die Länge (x-Richtung) und die Breite (y-Richtung) aufweisen.

Die erfindungsgemäßen zumindest zweilagigen Schaumstoffplatten beziehungsweise die entsprechenden Ausgangsplatten können beliebige Werte hinsichtlich ihres mittleren Zelldurchmessers (auch als Zellgröße" oder "mittlere Zellgröße" bezeichnet) aufweisen. Die jeweiligen Werte der Ausgangsplatten finden sich auch in den erfindungsgemäßen Schaumstoffplatten wieder, das heißt sie werden durch das Verbinden, insbesondere das thermische Verschweißen nicht verändert. Allerdings ist es bevorzugt, dass die Zellgröße der Schaumstoffplatte < 0,250 mm, vorzugsweise < 0,15 mm und ganz besonders bevorzugt < 0,1 mm ist.

Vorzugsweise weisen die dünneren Schaumstoffplatten (TS) und (NS) einen mittleren Zelldurchmesser ≥ 10 µm, mehr bevorzugt ≥ 50 µm auf. Der mittlere Zelldurchmesser kann nach der Norm "ASTM D 3576" (Bestimmung der Zellgröße von harten Schaumstoffen; Ausgabe 2015), also nach dem Fachmann bekannten Methoden gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels, beispielsweise während des Extrusionsverfahrens.

Vorzugsweise weist die zumindest zweilagige Schaumstoffplatte eine Wärmeleitfähigkeit λ ≤ 0,035 W/(mK), mehr bevorzugt ≤ 0,030 W/(mK), insbesondere ≤ 0,025 W/(mK), auf. Die entsprechenden Wärmeleitfähigkeitswerte gelten dabei für die gesamte zumindest zweilagige Schaumstoffplatte, vorzugsweise für eine zweilagige oder eine dreilagige Schaumstoffplatte. Die Wärmeleitfähigkeit der ganzen zumindest zweilagigen Platte wird nach EN 12667 oder EN12939 bei einer Mitteltemperatur von 10±0,3 °C gemessen (nach Lagerung von 6 h bei 23°C und 50 % Luftfeuchte).

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Vorzugsweise ist die dünnere thermoplastische Schaumstoffplatte (TS) ein Partikelschaumstoff oder ein Extrusionsschaumstoff auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis mindestens eines Polymers, ausgewählt aus der Gruppe bestehend aus Polystyrol, Polystyrolcopolymeren und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS). Ist die dünnere thermoplastische Schaumstoffplatte (TS) ein Partikelschaumstoff, so ist der Partikelschaumstoff vorzugsweise Styropor, Neopor oder E-Por, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Extrusionsschaumstoff aus einem extrudierten Polystyrol, der beispielsweise unter der Bezeichnung "Styrodur" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verbindenden Oberflächen, vorzugsweise an den thermisch zu verschweißenden Seiten (Oberflächen), schäumhautfrei ist.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 500 g/l, mehr bevorzugt 15 bis 200 g/l, insbesondere 20 bis 150 g/l.

Weiterhin ist es bevorzugt, dass die dünnere Schaumstoffplatte (TS) eine Wärmeleitfähigkeit λ ≤ 0,035 W/(mK), vorzugsweise ≤ 0,030 W/(mK) aufweist.

Die Wärmeleitfähigkeit der dünneren Schaumplatte (TS) wird vor Herstellung der zumindest zweilagigen Platte nach EN 12667 oder EN 12939 bei einer Mitteltemperatur von 10 ± 0,3 °C bestimmt (nach Lagerung von 6 h bei 23 °C und 50 % Luftfeuchte).

Die im erfindungsgemäßen Verfahren eingesetzte mindestens eine dünnere Schaumstoffplatte (NS) als solche ist dem Fachmann ebenfalls bekannt. Diese dünnere Schaumstoffplatte (NS) weist (mindestens) an zwei sich gegenüberliegenden Seiten jeweils eine Metalldeckschicht auf. Bezüglich der Definition der Metalldeckschicht wird auf die entsprechenden Passagen im Text weiter unten verwiesen. Die dünnere Schaumstoffplatte (NS) - ohne Berücksichtigung der jeweiligen Metalldeckschichten - kann jede beliebige dem Fachmann bekannte Schaumstoffplatte sein. Die dünnere Schaumstoffplatte (NS) kann also sowohl eine thermoplastische Schaumstoffplatte als auch eine nichtthermoplastische Schaumstoffplatte sein. Sofern die dünnere Schaumstoffplatte (NS) eine thermoplastische Schaumstoffplatte ist, gelten für die dünnere Schaumstoffplatte (NS) prinzipiell die gleichen Definitionen wie vorstehend für die dünnere thermoplastische Schaumstoffplatte (TS) ausgeführt. Selbstverständlich können für die beiden dünneren Ausgangsplatte (TS) und (NS) im Fall einer zweilagigen thermoplastischen Schaumstoffplatte genau die gleichen thermoplastischen Ausgangsplatten (TS) und (NS) - ohne Berücksichtigung der mindestens zwei Metalldeckschichten auf der Ausgangsplatte (NS) - verwendet werden oder zwei unterschiedliche thermoplastische Ausgangsplatten gemäß den vorstehenden Definitionen.

In einer bevorzugten Ausführungsform der vorliegenden Erfindung ist die dünnere Schaumstoffplatte (NS) eine nichtthermoplastische Schaumstoffplatte. Nichtthermoplastische Schaumstoffplatten als solche sind dem Fachmann ebenfalls bekannt. Sofern die dünnere Schaumstoffplatte (NS) eine nichtthermoplastische Schaumstoffplatte ist, ist sie vorzugsweise eine duroplastische Schaumstoffplatte, noch mehr bevorzugt eine Polyurethanschaumstoffplatte, insbesondere eine Polyurethanhartschaumplatte.

Sofern die dünnere Schaumstoffplatte (NS) eine nichtthermoplastische Schaumstoffplatte ist, weist sie die entsprechenden Dichtewerte auf. Die dünneren Schaumstoffplatten (NS) können prinzipiell beliebige Dichten aufweisen. Vorzugsweise beträgt die Dichte der dünneren Schaumstoffplatten (NS) 10 bis 500 g/l, mehr bevorzugt 15 bis 200 g/l, insbesondere 20 bis 150 g/l.

Sofern die dünnere Schaumstoffplatte (NS) eine duroplastische Schaumstoffplatte ist, wird diese bevorzugt durch Umsetzung einer reaktiven Mischung enthaltend mindestens eine Komponente (K1) und mindestens eine Komponente (K2) erhalten, wobei die Komponente (K1) mindestens ein Isocyanat umfasst und die Komponente (K2) ausgewählt ist aus mindestens einem Polyetherpolyol, einem Polyesterpolyol oder einem Polyamin.

Als erste Komponente (K1) geeignete Isocyanate weisen bevorzugt einen Isocyanatindex im Bereich von 100 bis 400, besonders bevorzugt im Bereich von 100 bis 300, insbesondere bevorzugt im Bereich von 100 bis 200, auf.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter "mit Isocyanat reaktiven Gruppen" werden dabei alle in der reaktiven Mischung enthaltenen gegenüber Isocyanat reaktiven Gruppen, einschließlich gegebenenfalls chemischer Treibmittel und Verbindungen mit Epoxidgruppen, verstanden, nicht aber die Isocyanatgruppe selbst.

Als zweite Komponente (K2) wird bevorzugt mindestens eine Verbindung mit gegenüber Isocyanaten reaktiven Gruppen eingesetzt. Derartige Verbindungen sind dem Fachmann bekannt.

Als Verbindung mit gegenüber Isocyanaten reaktiven Gruppen können beispielsweise alle Verbindungen eingesetzt werden, die zumindest zwei gegenüber Isocyanaten reaktive Gruppen wie OH-, SH-, NH- und/oder CH-azide Gruppen aufweisen.

Bevorzugt als zweite Komponente (K2) ist eine Verbindung mit gegenüber Isocyanaten reaktiven Gruppen, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist, und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist.

Polyetherpolyole als solche sind dem Fachmann bekannt und können nach bekannten Verfahren hergestellt werden, beispielsweise durch anionische Polymerisation von Alkylenoxiden unter Zusatz mindestens eines Startermoleküls, das vorzugsweise 2 bis 6 reaktive Wasserstoffatome gebunden enthält, in Gegenwart von Katalysatoren. Als Katalysatoren können Alkalihydroxide wie beispielsweise Natrium- oder Kaliumhydroxid oder Alkalialkoholate wie Natriummethylat, Natrium- oder Kaliumethylat oder Kaliumisopropylat eingesetzt werden. Bei kationischer Polymerisation werden als Katalysatoren beispielsweise Lewis-Säuren wie Ammoniumpentachlorid, Bortrifluridetherat oder Bleicherde eingesetzt. Weiter können als Katalysatoren auch Doppelmetallcyanidverbindungen, sogenannte DMC-Katalysatoren, sowie aminbasierte Katalysatoren eingesetzt werden.

Vorzugsweise werden als Alkylenoxide eine oder mehrere Verbindungen mit zwei bis vier Kohlenstoffatomen im Alkylenrest wie beispielsweise Ethylenoxid, Tetrahydrofuran, 1,2-Propylenoxid, 1,3-Propylenoxid, 1,2-Butylenoxid, 2,3-Butylenoxid sowie Mischungen daraus, eingesetzt. Bevorzugt werden Ethylenoxid und/oder 1,2-Propylenoxid eingesetzt.

Als Startermoleküle kommen beispielsweise Ethylenglycol, Diethylenglycol, Propylenglycol, Dipropylenglycol, Glyzerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere dem Fachmann bekannte zwei- oder mehrwertige Alkohole oder ein- oder mehrwertige Amine in Betracht.

Als Polyesterpolyole eignen sich alle dem Fachmann bekannten Polyesterpolyole. Beispielsweise können geeignete Polyesterpolyole durch Kondensation von mehrfunktionellen Alkoholen mit zwei bis zwölf Kohlenstoffen wie Ethylenglycol, Diethylenglycol, Butandiol, Trimethylolpropan, Glyzerin oder Pentaerythrit, mit mehrfunktionellen Carbonsäuren mit zwei bis zwölf Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren, den Anhydriden der genannten Säuren sowie Mischungen daraus, hergestellt werden. Bevorzugt werden aromatische Disäuren wie Phthalsäure, Isophthalsäure und/oder Terephthalsäure sowie deren Anhydride als Säurekomponente und Ethylenglycol, Diethylenglycol, 1,4-Butandiol und/oder Glyzerin als Alkoholkomponente eingesetzt.

Darüber hinaus können zur Herstellung der Polyesterpolyole anstatt der mehrfunktionellen Carbonsäuren auch entsprechende monomere Ester wie zum Beispiel Dimethylterephthalat oder polymere Ester wie zum Beispiel Polyethylenterephthalat eingesetzt werden.

Als Polyamine eignen sich alle dem Fachmann bekannten Polyamine. Geeignete Polyamine sind sowohl aliphatische Polyamine als auch aromatische Polyamine. Bevorzugt sind aliphatische Polyamine, die im Rahmen der vorliegenden Erfindung auch als "Polyalkylenpolyamine" bezeichnet werden.

Unter dem Begriff "Polyalkylenpolyamin" werden im Rahmen der vorliegenden Erfindung aliphatische Amine verstanden, die mindestens drei Aminogruppen (primär, sekundär oder tertiär) enthalten.

Als Polyalkylenpolyamine sind Polyethylenimine besonders bevorzugt. Unter "Polyethyleniminen" werden im Rahmen der vorliegenden Erfindung sowohl Oligomere als auch Homo- und Copolymere verstanden, welche die Gruppierungen -H₂-CH₂-NH-aufweisen und mindestens drei Aminogruppen enthalten.

Die erste Komponente (K1) und die zweite Komponente (K2) können miteinander reagieren. Diese Reaktionen sind dem Fachmann als solche bekannt.

Bei der Reaktion der ersten Komponente (K1) mit der zweiten Komponente (K2) bilden sich beispielsweise Polyurethane, Polyisocyanurate oder Polyharnstoffe, bevorzugt bilden sich Polyisocyanate oder Polyurethane, am meisten bevorzugt bilden sich Polyurethane. Dem Fachmann sind diese Reaktionen bekannt.

Beispielsweise bilden sich Polyurethane, wenn als erste Komponente (K1) Isocyanate eingesetzt werden und als zweite Komponente (K2) Polyetherpolyole. Polyisocyanurate bilden sich bei dem Einsatz von Isocyanaten als erste Komponente (K1) und Polyesterpolyolen als zweite Komponente (K2). Polyharnstoffe werden erhalten durch die Reaktion von Isocyanaten als erste Komponente (K1) und Polyaminen als zweite Komponente (K2).

Darüber hinaus können in der reaktiven Mischung, die zur Herstellung einer duroplastischen Schaumstoffplatte eingesetzt wird, weitere dem Fachmann bekannte Vernetzer enthalten sein.

Weiterhin ist es bevorzugt, dass die dünnere Schaumstoffplatte (NS) eine duroplastische Polyurethanschaumstoffplatte ist, die erhalten wird durch Umsetzung einer reaktiven Mischung enthaltend als Komponente (K1) mindestens ein Isocyanat, ausgewählt aus Toluoldiisocyanat (TDI), Diphenylmethandiisocyanat (MDI), polymeren Diphenylmethandiisocyanaten (PMDI) und Mischungen daraus, und als Komponente (K2) mindestens ein Polyetherpolyol und/oder mindestens ein Polyesterpolyol.

Vorzugsweise enthält die dünnere Schaumstoffplatte (NS) mindestens ein Treibmittel. Treibmittel als solche sind dem Fachmann bekannt. Das Treibmittel wird in der Regel beim Herstellungsprozess der entsprechenden Ausgangsplatte eingesetzt, so dass es sich insbesondere in den Poren der entsprechenden Ausgangsplatte befindet. Das Treibmittel kann dabei sowohl in einer dünneren thermoplastischen Schaumstoffplatte als auch in einer dünneren nichtthermoplastischen Schaumstoffplatte, insbesondere in einer duroplastische Schaumstoffplatte enthalten sein. Insbesondere werden Treibmittel bei der Herstellung von Ausgangsplatten im Rahmen des Extrusionsprozesses eingesetzt.

Bei den Treibmitteln kann es sich beispielsweise um physikalische und/oder chemische Treibmittel handeln. Unter chemischen Treibmitteln versteht man Verbindungen, die bei der Herstellung der Ausgangsplatte mit dem entsprechenden Edukten, beispielsweise einem Isocyanat, bei den entsprechenden Reaktionstemperaturen gasförmige Produkte bilden. Ein Beispiel für ein chemisches Treibmittel ist Wasser oder Ameisensäure. Unter physikalischen Treibmitteln versteht man Verbindungen, die in den entsprechenden Ausgangsplatten gelöst oder emulgiert sind und die gegebenenfalls verdampfen können.

Beispiele für im Rahmen des erfindungsgemäßen Verfahrens einsetzbaren Treibmittel sind Kohlenwasserstoffe, halogenierte Kohlenwasserstoffe und andere Verbindungen wie zum Beispiel perfluorierte Alkane wie Perfluorhexan, Fluorchlorkohlenwasserstoffe und Etheresterketone, Acetale sowie anorganische und organische Verbindungen, die beim Erhitzen Stickstoff freisetzen oder Mischungen daraus, beispielsweise (cyclo)aliphatische Kohlenwasserstoffe mit vier bis acht Kohlenstoffatomen oder Fluorkohlenwasserstoffe wie 1,1,1,3,3-Pentafluorporopan (HFC 245 fa), Trifluormethan, Difluormethan, 1,1,1,3,3-Pentafluorbutan (HFC 365 mfc), 1,1,1,2-Tetrafluorethan, Difluorethan und Heptafluorpropan.

Weiterhin können alle dem Fachmann bekannten halogenierten, bevorzugt fluorierten, Alkene als Treibmittel eingesetzt werden. Bevorzugt sind dabei C2- bis C6-Fluoralkene, besonders bevorzugt C3- bis C5-Fluoralkene. Weitere Beispiele geeigneter fluorierter Alkene sind Propene, Butene, Pentene und Hexene mit drei bis sechs Fluorsubstituenten, wobei andere Substituenten wie Chlor vorhanden sein können, beispielsweise Tetrafluorpropene, Fluorchlorpropene, beispielsweise Trifluormonochlorpropene, Pentafluorpropene, Fluorchlorbutene, Hexafluorbutene oder Mischungen davon.

Beispiele dafür sind: fluorierte Alkene ausgewählt aus der Gruppe bestehend aus cis-oder trans-1,1,1,3-Tetrafluorpropen, 1,1,1-Trifluor-2-chlorpropen, 1-Chlor-3,3,3-trifluorpropen, 1,1,1,2,3-Pentafluorpropen, in cis-oder trans-Form, 1,1,1,4,4,4-Hexafluorbuten, 1-Brompentafluorpropen, 2-Brompentafluorpropen, 3-Brompentafluorpropen, 1,1,2,3,3,4,4-Heptafluor-1-buten, 3,3,4,4,5,5,5-Heptafluor-1-penten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1-Chlor-3,3,3-trifluorpropen, 2-Chlor-3,3,3-trifluorpropen, 1,1,1-Trifluor-2-buten und Mischungen davon.

Vorzugsweise ist das Treibmittel ein aliphatischer Kohlenwasserstoff oder ein halogenierter Kohlenwasserstoff, insbesondere ist das Treibmittel ausgewählt aus n-Pentan, iso-Pentan, Cyclopentan, einem fluorhaltigen Kohlenwasserstoff, einem chlorhaltigen Kohlenwasserstoff oder einem halogenierten Alken. Weiterhin ist es bevorzugt, dass das Treibmittel auch Wasser enthalten kann.

Weiterhin ist es bevorzugt, dass die dünnere Schaumstoffplatte (NS) eine Wärmeleitfähigkeit λ ≤ 0,030 W/(mK), vorzugsweise ≤ 0,025 W/(mK), insbesondere ≤ 0,020 W/(mK), aufweist.

Die Wärmeleitfähigkeit der dünneren Schaumplatte (NS) wird vor Herstellung der zumindest zweilagigen Platte nach EN 12667 oder EN 12939 bei einer Mitteltemperatur von 10 ± 0,3 °C bestimmt (nach Lagerung von 6 h bei 23 °C und 50 % Luftfeuchte).

Die dünnere Schaumstoffplatte (NS) weist an zwei sich gegenüberliegenden Seiten jeweils eine Metalldeckschicht auf. Metalldeckschichten als solche sind dem Fachmann bekannt. Als Metall können hierfür prinzipiell alle dem Fachmann bekannten Metalle eingesetzt werden, vorzugsweise wird Aluminium als Metall verwendet, insbesondere in Form von Aluminiumfolien. Gegebenenfalls können auch unterschiedliche Metalle oder Gemische bzw. Legierungen als Metalldeckschicht im Rahmen der vorliegenden Erfindung auf die dünnere Schaumstoffplatte (NS) aufgebracht werden. Voraussetzung ist dabei aber, dass mindestens zwei sich gegenüberliegende Seiten der dünneren Schaumstoffplatte (NS) eine solche Metalldeckschicht aufweisen. Gegebenenfalls können auch sämtliche (sechs) Seiten der dünneren Schaumstoffplatte (NS) mit einer Metalldeckschicht versehen werden.

Vorzugsweise enthält mindestens eine der Metalldeckschichten der dünneren Schaumstoffplatte (NS) Aluminium, wobei
i) die dünnere Schaumstoffplatte (NS) vorzugsweise genau zwei Metalldeckschichten aufweist, die beide vollständig aus Aluminium hergestellt sind, und/oder
ii) die genau zwei Metalldeckschichten vorzugsweise jeweils auf den beiden flächenmäßig größten und sich gegenüberliegenden Seiten der dünneren Schaumstoffplatten (NS) aufgebracht sind, und/oder
iii) mindestens eine, mehr bevorzugt jede der Seiten der dünneren Schaumstoffplatte (NS), die keine Metalldeckschicht aufweisen, vorzugsweise mit einer Schutzschicht versehen ist, insbesondere einer Epoxidharzschutzschicht.

Das Verbinden der dünneren Ausgangsplatten (TS) und (NS) zu der zumindest zweilagigen Schaumstoffplatte als solche kann prinzipiell nach beliebigen dem Fachmann bekannten Verfahren durchgeführt werden. Das Verbinden kann beispielsweise in Form von Quellschweißen, Lösungsmittelschweißen, Verkleben und/oder thermischem Verschweißen durchgeführt werden. Losgelöst von der konkreten Art des Verbindens der Ausgangsplatten ist es aber grundsätzlich erforderlich, dass die dünnere thermoplastische Schaumstoffplatte (TS) und die dünnere Schaumstoffplatte (NS) so miteinander verbunden werden, dass sich in der zumindest zweilagigen Schaumstoffplatte eine Metalldeckschicht zwischen der dünneren thermoplastischen Schaumstoffplatte (TS) und der dünneren Schaumstoffplatte (NS) befindet. Vorzugsweise erfolgt im Rahmen der vorliegenden Erfindung das Verbinden der dünneren thermoplastischen Schaumstoffplatte (TS) und der dünneren Schaumstoffplatte (NS) durch thermisches Verschweißen.

Sofern das Verbinden der jeweiligen Ausgangsplatten (NS) und (TS) durch Verkleben durchgeführt wird, kann die Durchführung des Klebevorgangs bzw. die Auswahl geeigneter Klebstoffe gemäß der Offenbarung der deutschen Patentanmeldung DE 10 2012 023180.6 durchgeführt werden.

Das Verbinden der Ausgangsplatten in Form von thermischem Verschweißen kann ebenfalls nach allen dem Fachmann bekannten Arten durchgebührt werden. Entsprechende Verfahren zum thermischen Verschweißen sind beispielsweise in WO 2015/011016 beschrieben.

Der Effekt des Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das Verschweißen mit einer Vorrichtung ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum Verschweißen Noppen oder Rillen aufweist, können auf diese Weise insbesondere auch strukturierte Vertiefungen auf die entsprechende Oberfläche der zu verbindenden dünneren Schaumstoffplatten (TS) aufgebracht werden. Anstelle der Verwendung einer Vorrichtung wie eines Heizschwerts oder eines Heizgitters ist es auch möglich, das Verschweißen, also die Wärmezufuhr, unter Verwendung von elektromagnetischer Strahlung teilweise oder vollständig durchzuführen.

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Die Schweißnaht kann in Abhängigkeit des verwendeten Verschweißungsverfahrens prinzipiell eine beliebige Dicke annehmen, vorzugsweise ist die Dicke der Schweißnaht jedoch nicht allzu groß, also nicht größer als 500 µm.

Die im Rahmen der vorliegenden Erfindung für die Dicke einer Schweißnaht aufgeführten Zahlenwerte sind als Durchschnittswerte zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Im Rahmen der vorliegenden Erfindung ist es weiterhin bevorzugt, dass das Verbinden durch thermisches Verschweißen erfolgt und eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird.

Im Rahmen der vorliegenden Erfindung wird beim thermischen Verschweißen mindestens ein Heizelement eingesetzt. Gegebenenfalls können aber auch zwei oder mehrere Heizelemente verwendet werden. Dabei kann es sich um dieselben Heizelemente oder um unterschiedliche Heizelemente handeln. In einer Ausführungsform der vorliegenden Erfindung ist es bevorzugt, dass mindestens zwei Heizelemente verwendet werden. Vorzugsweise werden die Heizelemente auf zueinander parallelen Ebenen eingesetzt. Vorzugsweise erfolgt das thermische Verschweißen als kontaktloses Verschweißen, das heißt, die Oberflächen des Heizelements und die Oberflächen der zu verschweißenden Platten berühren sich nicht.

Weiterhin ist es bevorzugt, dass die Heizelemente Heizplatten sind, vorzugsweise IR-Strahler mit einer Oberflächentemperatur von 200 bis 1000 °C, insbesondere von 300 bis 700 °C.

In einer bevorzugten Ausführungsform der vorliegenden Erfindung wird das thermische Verschweißen nach einem Verfahren durchgeführt, das die folgenden Schritte a) bis e) umfasst:
a) Eine dünnere thermoplastische Schaumstoffplatte (TS) und eine dünnere Schaumstoffplatte (NS), die an zwei sich gegenüberliegenden Seiten jeweils eine Metalldeckschicht aufweist, werden in einem Abstand a parallel zueinander ausgerichtet, sodass sie einen Zwischenraum ausbilden und eine Metalldeckschicht der dünneren Schaumstoffplatte (NS) der dünneren thermoplastischen Schaumstoffplatte (TS) gegenüberliegt,
b) in den Zwischenraum werden mindestens zwei Heizelemente auf parallel zueinander versetzten Ebenen und parallel zu den beiden dünneren Schaumstoffplatten (TS) und (NS) eingeführt, wobei sich die Oberflächen der dünneren thermoplastischen Schaumstoffplatte (TS), die Metalldeckschicht der dünneren Schaumstoffplatte (NS) und die Heizelemente nicht gegenseitig berühren,
c) die Heizelemente werden so weit zwischen die beiden dünneren Schaumstoffplatten (TS) und (NS) eingeführt, bis zwischen den beiden dünneren Schaumstoffplatten (TS) und (NS) bezogen auf jede Stelle der jeweiligen Oberfläche der beiden dünneren Schaumstoffplatten (TS) und (NS) zumindest zeitweise sich mindestens eines der Heizelemente befunden hat,
d) die Heizelemente werden vollständig aus dem Zwischenraum wieder entfernt,
e) mindestens eine der beiden dünneren Schaumstoffplatten (TS) und (NS) wird gegen die Oberfläche der jeweiligen anderen dünneren Schaumstoffplatte (TS) und (NS) gedrückt.

Der Abstand a ist in Schritt a) dabei so gewählt, dass mindestens zwei Heizelemente zwischen den entsprechenden Ausgangsplatten in parallel zueinander versetzten Ebenen so bewegt werden können, dass sie die Oberflächen der entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand a ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand a 10 bis 150 mm, insbesondere 15 bis 80 mm.

In Schritt b) dieser Ausführungsform des erfindungsgemäßen Verfahrens werden in den Zwischenraum mindestens zwei Heizelemente auf parallel zueinander versetzten Ebenen und parallel zu den beiden dünneren Schaumstoffplatten eingeführt, wobei sich die Oberflächen der beiden dünneren Schaumstoffplatten und die Heizelemente nicht gegenseitig berühren.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise werden erfindungsgemäß zwei Heizelemente verwendet, weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizplatten sind IR-Strahler mit einer Oberflächentemperatur von 200 bis 1.000 °C, insbesondere von 300 bis 700 °C. Sie können beispielsweise in der Außenposition (Ruheposition) vorgeheizt werden oder elektrisch über Widerstandsheizungen oder mittels Wärmeträgerölen erhitzt werden.

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein. Bevorzugt ist, dass die Heizelemente, insbesondere Heizplatten, in ihrer Länge (x-Richtung) jeweils gleich groß oder maximal 35 % größer sind als die entsprechenden Längen (x-Richtung) der zwei dünneren thermoplastischen Schaumstoffplatten und die Heizelemente in ihrer Breite (y-Richtung) 30 bis 140 %, vorzugsweise 60 bis 120 %, der entsprechenden Breite (y-Richtung) der zwei dünneren Schaumstoffplatten betragen.

Im Rahmen dieser Ausführungsform werden vorzugsweise in Schritt b) zwei Heizelemente aus jeweils zueinander entgegengesetzten Richtungen in den Zwischenraum eingeführt und/oder es werden vorzugsweise zwei Heizelemente in Schritt d) in jeweils zueinander entgegengesetzten Richtungen aus dem Zwischenraum wieder entfernt.

Prinzipiell ist es denkbar, dass beide Ausgangsplatten in Schritt e) gegeneinander gedrückt werden, also so lange aufeinander zu bewegt werden, bis der Abstand a gleich null ist. Vorzugsweise wird erfindungsgemäß aber nur eine der beiden Ausgangsplatten gegen die jeweils andere Ausgangsplatte gedrückt. Bei einer bezogen auf die Räumlichkeit horizontalen Anordnung der Ausgangsplatten ist es bevorzugt, dass die räumlich gesehen obere Ausgangsplatte gegen die untere Ausgangsplatte gedrückt wird. Dies erfolgt vorzugsweise unter Verwendung einer entsprechenden Greifvorrichtung, mit der die Ausgangsplatten sowohl angehoben als auch unter Anwendung von Druck gegen die unteren Platten verschoben werden können. Die unteren Ausgangsplatten können auch auf einer Senkvorrichtung aufliegen, die bei der Herstellung von höherlagigen Schaumstoffplatten entsprechend nach unten bewegt werden kann. Vorzugsweise wird die Senkvorrichtung aber während der Durchführung der erfindungsgemäßen Schritte a) bis e) nicht bewegt. Ein Absenken der Senkvorrichtung erfolgt vorzugsweise erst vor der Wiederholung der Schritte a) bis e), um eine drei- oder höherlagige Schaumstoffplatte herzustellen.

Weiterhin ist es bevorzugt, dass in dieser Ausführungsform des erfindungsgemäßen Verfahrens im Rahmen von Schritt e) ein Verpressen der thermisch zu verschweißenden zusammengefügten dünnen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Weiterhin ist es im Rahmen der vorstehenden Ausführungsform bevorzugt, dass das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1.000 °C, insbesondere von 300 bis 700 °C, und/oder
iii) die Heizelemente in den Schritten b) und d) mit einer Geschwindigkeit von 0,1 bis 5 m/s, vorzugsweise von 0,3 bis 3 m/s, bewegt werden, und/oder
iv) in Schritt b) zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) maximal 20 Sekunden, vorzugsweise maximal 10 Sekunden, insbesondere maximal 5 Sekunden, beträgt.

Ein weiterer Gegenstand der vorliegenden Erfindung ist eine zumindest zweilagige Schaumstoffplatte, erhältlich nach dem vorstehend beschriebenen Verfahren.

Ein weiterer Gegenstand der vorliegenden Erfindung ist die Verwendung einer solchen zumindest zweilagigen Schaumstoffplatte zur Wärmedämmung.

Nachfolgend wird die vorliegende Erfindung anhand von Beispielen näher erläutert.

### Beispiele

In den nachfolgenden Beispielen werden die zumindest zweilagigen Schaumstoffplatten durch thermisches Verschweißen hergestellt. Das thermische Verschweißen wird in einer Verschweißungsanlage durchgeführt, die sinngemäß in WO 2015/011016 in den dortigen Versuchen verwendet worden ist. Die in den vorliegenden Beispielen eingesetzte Verschweißungsanlage umfasst somit Aufnahmeplatten, die die zu verschweißenden Ausgangsplatten (dünnere Schaumstoffplatten (NS) sowie (TS)) in Abmessungen bis 1.300 x 660 mm aufnehmen können. Die Aufnahmeplatten und das zu verschweißende Material sind vertikal angeordnet. Soweit im nachfolgenden Text nicht anders ausgeführt, sind in den vorliegenden Beispielen die entsprechenden Parameter gemäß den Versuchen von WO 2015/011016 verwendet worden.

Die zu verschweißenden Ausgangsplatten, also mindestens eine dünnere thermoplastische Schaumstoffplatte (TS) und mindestens eine dünnere Schaumstoffplatte (NS), die an den jeweils beiden flächenmäßig größten und sich gegenüberliegenden Seiten eine Aluminiumdeckschicht aufweisen, haben jeweils die folgenden Dimensionen:

| | |
|---|---|
| Länge (x-Richtung): | 1.000 mm |
| Breite (y-Richtung): | 500 mm |
| Dicke (z-Richtung): | Die jeweiligen Werte sind in den nachfolgenden Tabellen 1 und 2 für die einzelnen Beispiele angegeben. |

Die Dicke der beiden Aluminiumdeckschichten auf der kaschierten Schaumstoffplatte (NS) beträgt jeweils 0,05 mm. Die Dickewerte der Aluminiumdeckschicht sind in den entsprechenden Dickeangaben für die jeweilige Dicke der dünneren Schaumstoffplatte (NS) gemäß den Tabellen 1 und 2 bereits mitberücksichtigt. Die Abmessung der Aluminiumdeckschicht in x-Richtung sowie y-Richtung entspricht exakt den entsprechenden Abmessungen der zu verschweißenden dünneren Schaumstoffplatten (NS) und (TS).

Das thermische Verschweißen wird so durchgeführt, dass erfindungsgemäß in der zumindest zweilagigen Schaumstoffplatte eine der beiden Aluminiumdeckschichten (Metalldeckschichten) der dünneren Schaumstoffplatte (NS) sich nach dem Verschweißungsvorgang zwischen jeweils einer flächenmäßig gleichgroßen Seite befindet, die von der dünneren thermoplastischen Schaumstoffplatte (TS) bzw. von der dünneren Schaumstoffplatte (NS) stammt. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden. Soweit nicht anders angegeben, sind in den nachfolgenden Beispielen die dünneren Schaumstoffplatten (NS) nur an den beiden flächenmäßig größten Seiten mit Aluminiumdeckplatten kaschiert (also diejenigen Seiten, die durch die x- und y-Richtung festgelegt werden).

Zwei Heizelemente der Abmessung 1.320 und 680 mm werden auf die gewünschte Schweißtemperatur aufgeheizt. Das Aufheizen geschieht kontaktlos durch IR-Strahler, kann aber auch durch induktive Beheizung erfolgen.

Von den Heizstationen werden die Heizelemente in den Zwischenraum zwischen die zu verschweißenden Platten (Ausgangsplatten (NS) und (TS)) bewegt. Der Vollständigkeit halber wird angemerkt, dass eine der beiden mit der Aluminiumdeckschicht kaschierten Seiten der Ausgangsplatte (NS) den Zwischenraum auf der einen Seite begrenzt, also den beiden Heizelementen während des Heizvorgang direkt gegenüberliegt. Dabei werden die Heizelemente zunächst beschleunigt und dann wieder abgebremst, so dass die Heizelemente mittig vor den zu verschweißenden Platten stehen bleiben. Dort bleiben die Heizelemente für eine definierte Heizzeit stehen.

Am Ende der Heizzeit werden die Heizelemente wieder beschleunigt und verlassen den Zwischenraum zwischen den zu verschweißenden Platten. Genauere Informationen in diesem Zusammenhang können den Tabellen 1 und 2 entnommen werden.

Sobald die Heizelemente den Zwischenraum zwischen den zu verschweißenden Platten verlassen haben, werden diese zusammengepresst. Dabei bewegen sich beide Aufnahmeplatten aufeinander zu und pressen die zu verschweißenden Platten mit einem definierten Anpressdruck zusammen.

Bei den in Tabelle 1 aufgeführten Beispielen 1 bis 4 wird der vorgenannte Verschweißungsvorgang einfach durchgeführt, wobei dadurch eine genau zweilagige Schaumstoffplatte erhalten wird. Im Gegensatz dazu wird bei den in Tabelle 2 aufgeführten Beispielen 5 bis 8 eine genau dreilagige Schaumstoffplatte erhalten. Bei diesen Beispielen wird der vorstehend beschriebene Verschweißungsvorgang zweimal durchgeführt. In anderen Worten ausgedrückt, wird bei den in Tabelle 2 aufgeführten Beispielen eine zweite dünnere thermoplastische Schaumstoffplatte (TS) auf die nach dem ersten Verschweißungsvorgang erhaltene zumindest zweilagige Schaumstoffplatte aufgeschweißt. Der zweite Verschweißungsvorgang wird dabei so durchgeführt, dass sich wiederum eine Aluminiumdeckschicht zwischen einer von einer dünneren thermoplastischen Ausgangsplatte (TS) und einer von einer dünneren Ausgangsplatte (NS) stammenden Seite befindet.

### Herstellung einer zweilagigen Platte (siehe Tabelle 1)

Es werden folgende dünnere Ausgangsplatten eingesetzt:
a) thermoplastische Platten (TS) und
b) alukaschierte Schaumplatten (NS)

Die alukaschierten Styrodurplatten (Ausgangsplatte b)) werden dabei folgendermaßen hergestellt: Styrodur wird, wie in EP 2706086 beschrieben, mit den Treibmitteln HFO 1234ze(E) (trans 1,3,3,3-tetrafluoropropene), Ethanol und CO₂ geschäumt. Von diesen Treibmitteln wird 5,2 % HFO, 2,5 % Ethanol und 1,5 % CO₂, bezogen auf die Feststoffmenge, zugegeben.

Direkt nach der Extrusion der Platten wird auf der Ober- und Unterseite die Schäumhaut abgefräst. Die schäumhautfreien Platten werden direkt danach mit einer Alufolie kaschiert.

Die mit Alu kaschierten duroplastische Polyurethanplatten wurden unter Verwendung von Cyclopentan als Treibmittel hergestellt.

Sofern als thermoplastische Ausgangsplatte a) Styrodur eingesetzt wird, wird bei diesen Ausgangsplatten vor dem Durchführen des thermischen Verschweißens an den zu verschweißenden Flächen ebenfalls die Schäumhaut durch Fräsen entfernt.

### Beispiel 1

a) Neopor:
   Dichte 15 g/l; Platten geschäumt aus Neopor (2200 BASF SE; λ = 32 mW/m*K)
b) mit Alufolie beidseitig kaschierte duroplastische Polyurethan-(PU-)Platte:
   Dichte 32 g/l; λ = 22 mW/(mK)

### Beispiel 2

a) Styrodur:
   Dichte 30 g/l; λ = 33 mW/(mK)
b) mit Alufolie beidseitig kaschierte duroplastische Polyurethan-(PU-)Platte:
   Dichte 32 g/l; λ = 22 mW/(mK)

### Beispiel 3

a) Neopor:
   Dichte 15 g/l; Platten geschäumt aus Neopor (2200 BASF SE; λ = 32 mW/(mK))
b) mit Alufolie beidseitig kaschierte thermoplastische Styrodurplatte:
   Dichte 34 g/l; λ = 23 mW/(mK)

### Beispiel 4

a) Styrodur:
   Dichte 30 g/l; λ = 33 mW/(mK)
b) mit Alufolie beidseitig kaschierte thermoplastische Styrodurplatte:
   Dichte 34 g/l; λ = 23 mW/(mK)

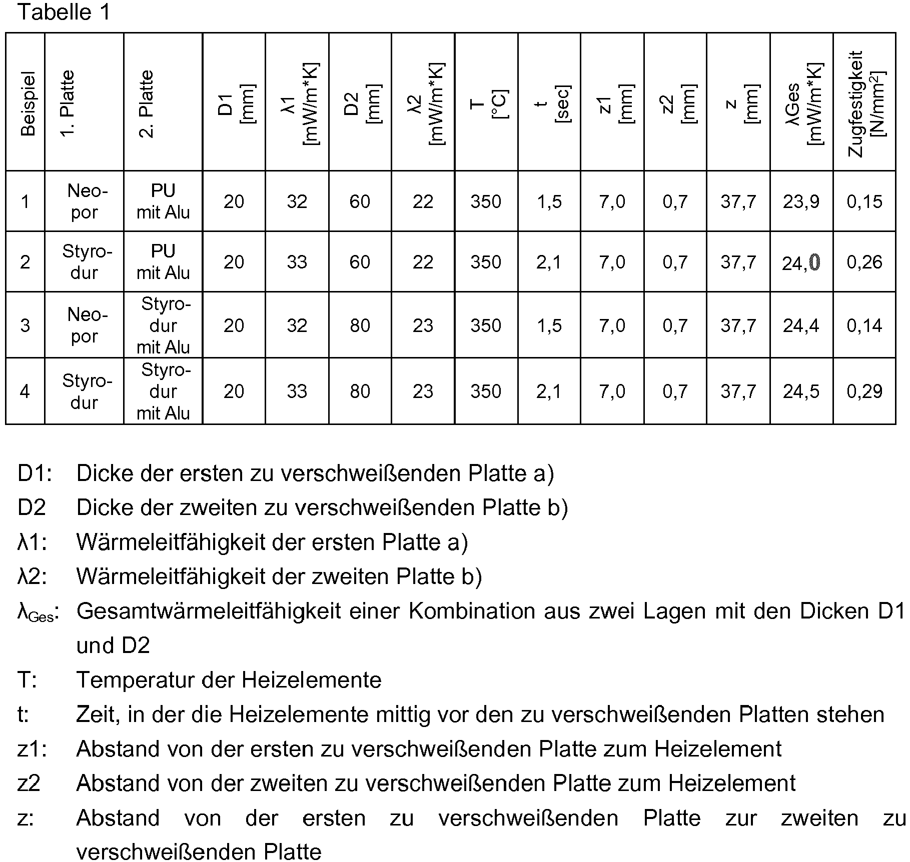

### Herstellung einer dreilagigen Platte (siehe Tabelle 2)

Durch zweifaches Ausführen des Schweißvorgangs gemäß Tabelle 1 werden folgende Kombinationen von dreilagigen Platten hergestellt:

| | | | | |
|---|---|---|---|---|
| Neopor | - | alukaschiertes PU | - | Neopor |
| Styrodur | - | alukaschiertes PU | - | Styrodur |
| Neopor | - | alukaschiertes Styrodur | - | Neopor |
| Styrodur | - | alukaschiertes Styrodur | - | Styrodur |

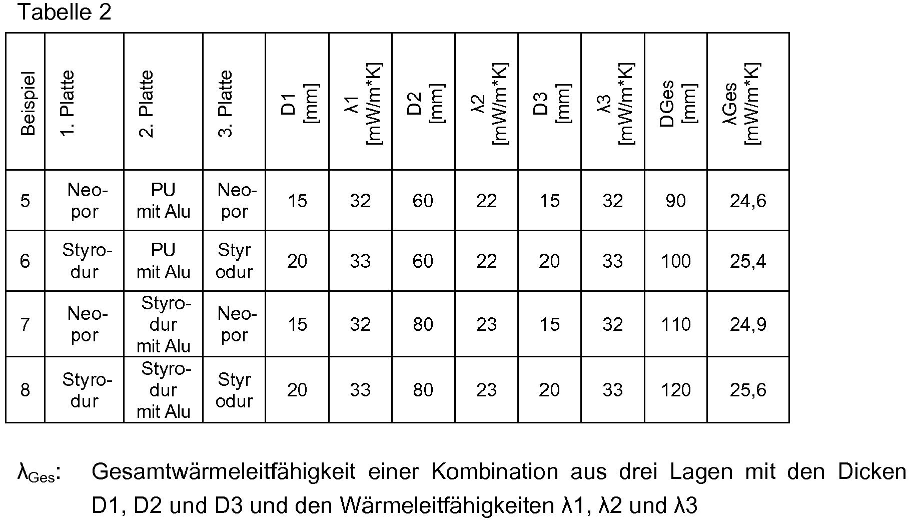

## Patentansprüche

1. Verfahren zur Herstellung einer zumindest zweilagigen Schaumstoffplatte durch Verbinden von mindestens einer dünneren thermoplastischen Schaumstoffplatte (TS) und mindestens einer dünneren Schaumstoffplatte (NS), wobei die dünnere Schaumstoffplatte (NS) an zwei sich gegenüberliegenden Seiten jeweils eine Metalldeckschicht aufweist und wobei die dünnere thermoplastische Schaumstoffplatte (TS) und die dünnere Schaumstoffplatte (NS) so miteinander verbunden werden, dass in der zumindest zweilagigen Schaumstoffplatte sich eine Metalldeckschicht zwischen der dünneren thermoplastischen Schaumstoffplatte (TS) und der dünneren Schaumstoffplatte (NS) befindet und wobei das Verbinden der dünneren thermoplastischen Schaumstoffplatte (TS) und der dünneren Schaumstoffplatte (NS) durch thermisches Verschweißen erfolgt.

2. Verfahren gemäß Anspruch 1, durch gekennzeichnet, dass die dünnere Schaumstoffplatte (NS) eine thermoplastische Schaumstoffplatte oder eine nichtthermoplastische Schaumstoffplatte ist, vorzugweise ist die dünnere Schaumstoffplatte (NS) eine nichtthermoplastische Schaumstoffplatte, mehr bevorzugt eine duroplastische Schaumstoffplatte, noch mehr bevorzugt eine Polyurethanschaumstoffplatte, insbesondere eine Polyurethanhartschaumplatte.

3. Verfahren gemäß Anspruch 1 oder 2, **dadurch gekennzeichnet, dass** mindestens eine der Metalldeckschichten der dünneren Schaumstoffplatte (NS) Aluminium enthält,
i) vorzugsweise weist die dünnere Schaumstoffplatte (NS) genau zwei Metalldeckschichten auf, die beide vollständig aus Aluminium hergestellt sind, und/oder
ii) vorzugsweise sind die genau zwei Metalldeckschichten jeweils auf den beiden flächenmäßig größten und sich gegenüberliegenden Seiten der dünneren Schaumstoffplatten (NS) aufgebracht, und/oder
iii) vorzugsweise ist mindestens eine, mehr bevorzugt jede, der Seiten der dünneren Schaumstoffplatte (NS), die keine Metalldeckschicht aufweisen, mit einer Schutzschicht versehen, insbesondere einer Epoxidharzschutzschicht.

4. Verfahren gemäß einem der Ansprüche 1 bis 3, **dadurch gekennzeichnet, dass** die dünnere Schaumstoffplatte (NS) mindestens ein Treibmittel enthält, vorzugsweise ist das Treibmittel ein aliphatischer Kohlenwasserstoff oder ein halogenierter Kohlenwasserstoff, insbesondere ist das Treibmittel ausgewählt aus n-Pentan, iso-Pentan, Cyclopentan, einem fluorhaltigen Kohlenwasserstoff, einem chlorhaltigen Kohlenwasserstoff oder einem halogenierten Alken.

5. Verfahren gemäß einem der Ansprüche 1 bis 4, **dadurch gekennzeichnet, dass**
i) die dünnere Schaumstoffplatte (NS) eine Wärmeleitfähigkeit λ ≤ 0,030 W/(mK), vorzugsweise ≤ 0,025 W/(mK), insbesondere ≤ 0,020 W/(mK), aufweist, und/oder
ii) die zumindest zweilagige Schaumstoffplatte eine Wärmeleitfähigkeit λ ≤ 0,035 W/(mK), vorzugsweise ≤ 0,030 W/(mK), insbesondere ≤ 0,025 W/(mK), aufweist.

6. Verfahren gemäß einem der Ansprüche 1 bis 5, **dadurch gekennzeichnet, dass** eine dreilagige Schaumstoffplatte hergestellt wird durch Verbindung von zwei dünneren thermoplastischen Schaumstoffplatten (TS) und einer dünneren Schaumstoffplatte (NS), die an zwei sich gegenüberliegenden Seiten jeweils eine Metalldeckschicht aufweist, wobei jeweils eine dünnere thermoplastische Schaumstoffplatte (TS) auf jeweils einer sich gegenüberliegenden Seite der dünneren Schaumstoffplatte (NS) unter Erhalt der dreilagigen Schaumstoffplatte aufgebracht wird und sich jeweils eine Metalldeckschicht zwischen der jeweiligen dünneren thermoplastischen Schaumstoffplatte (TS) und der dünneren Schaumstoffplatte (NS) befindet.

7. Verfahren gemäß Anspruch 6, **dadurch gekennzeichnet, dass** eine vier- oder höherlagige Schaumstoffplatte hergestellt wird, wobei ausgehend von der dreilagigen Schaumstoffplatte eine zweite dünnere Schaumstoffplatte (NS), die an zwei sich gegenüberliegenden Seiten jeweils eine Metalldeckschicht aufweist, auf eine von einer dünneren thermoplastischen Schaumstoffplatte (TS) stammenden Seite der dreilagigen Schaumstoffplatte aufgebracht wird, die daraus erhaltene vierlagige Schaumstoffplatte abwechselnd insgesamt vier Lagen aus dünneren thermoplastischen Schaumstoffplatten (TS) und dünneren Schaumstoffplatten (NS) aufweist, sich jeweils eine Metalldeckschicht zwischen einer Lage aus dünnerer thermoplastischer Schaumstoffplatte (TS) und einer Lage aus dünnerer Schaumstoffplatte (NS) befindet und die erste und zweite dünnere Schaumstoffplatte (NS) sich auf jeweils einer gegenüberliegenden Seite einer dünneren thermoplastischen Schaumstoffplatte (TS) befinden, wobei gegebenenfalls zum Erhalt von höherlagigen Schaumstoffplatten das abwechselnde Aufbringen einer weiteren dünneren thermoplastischen Schaumstoffplatte (TS) oder einer dünneren Schaumstoffplatte (NS), die an zwei sich gegenüberliegenden Seiten jeweils eine Metalldeckschicht aufweist, mindestens einfach wiederholt wird.

8. Verfahren gemäß einem der Ansprüche 1 bis 7, **dadurch gekennzeichnet, dass** eine zumindest zweilagige Schaumstoffplatte durch thermisches Verschweißen hergestellt wird, umfassend die folgenden Schritte a) bis e):
a) eine dünnere thermoplastische Schaumstoffplatte (TS) und eine dünnere Schaumstoffplatte (NS), die an zwei sich gegenüberliegenden Seiten jeweils eine Metalldeckschicht aufweist, werden in einem Abstand a parallel zueinander ausgerichtet, sodass sie einen Zwischenraum ausbilden und eine Metalldeckschicht der dünneren Schaumstoffplatte (NS) der dünneren thermoplastischen Schaumstoffplatte (TS) gegenüberliegt,
b) in den Zwischenraum werden mindestens zwei Heizelemente auf parallel zueinander versetzten Ebenen und parallel zu den beiden dünneren Schaumstoffplatten (TS) und (NS) eingeführt, wobei sich die Oberflächen der dünneren thermoplastischen Schaumstoffplatte (TS), die Metalldeckschicht der dünneren Schaumstoffplatte (NS) und die Heizelemente nicht gegenseitig berühren,
c) die Heizelemente werden so weit zwischen die beiden dünneren Schaumstoffplatten (TS) und (NS) eingeführt, bis zwischen den beiden dünneren Schaumstoffplatten (TS) und (NS) bezogen auf jede Stelle der jeweiligen Oberfläche der beiden dünneren Schaumstoffplatten (TS) und (NS) zumindest zeitweise sich mindestens eines der Heizelemente befunden hat,
d) die Heizelemente werden vollständig aus dem Zwischenraum wieder entfernt,
e) mindestens eine der beiden dünneren Schaumstoffplatten (TS) und (NS) wird gegen die Oberfläche der jeweiligen anderen dünneren Schaumstoffplatte (TS) und (NS) gedrückt,
wobei vorzugsweise in Schritt b) zwei Heizelemente aus jeweils zueinander entgegengesetzten Richtungen in den Zwischenraum eingeführt werden und/oder vorzugsweise zwei Heizelemente in Schritt d) in jeweils zueinander entgegengesetzten Richtungen aus dem Zwischenraum wieder entfernt werden.

9. Verfahren gemäß einem der Ansprüche 1 bis 8, **dadurch gekennzeichnet, dass**
i) die dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis mindestens eines Polymers, ausgewählt aus der Gruppe bestehend aus Polystyrol, Polystyrolcopolymeren und Polyethylenterephthalat, und/oder
ii) die dünnere Schaumstoffplatte (NS) eine duroplastische Schaumstoffplatte ist, die durch Umsetzung einer reaktiven Mischung enthaltend mindestens eine Komponente (K1) und mindestens eine Komponente (K2) erhalten wird, wobei die Komponente (K1) mindestens ein Isocyanat umfasst und die Komponente (K2) ausgewählt ist aus mindestens einem Polyetherpolyol, einem Polyesterpolyol oder einem Polyamin.

10. Verfahren gemäß einem der Ansprüche 1 bis 9, **dadurch gekennzeichnet, dass** die dünnere Schaumstoffplatte (NS) eine duroplastische Polyurethanschaumstoffplatte ist, die durch Umsetzung einer reaktiven Mischung enthaltend als Komponente (K1) mindestens ein Isocyanat, ausgewählt aus Toluoldiisocyanat (TDI), Diphenylmethandiisocyanat (MDI), polymeren Diphenylmethandiisocyanaten (PMDI) und Mischungen daraus, und als Komponente (K2) mindestens ein Polyetherpolyol und/oder mindestens ein Polyesterpolyol erhalten wird.

11. Verfahren gemäß einem der Ansprüche 1 bis 10, **dadurch gekennzeichnet, dass** das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1000 °C, insbesondere von 300 bis 700 °C, und/oder
iii) die Heizelemente in den Schritten b) und d) gemäß Anspruch 8 mit einer Geschwindigkeit von 0,1 bis 5 m/s, vorzugsweise von 0,3 bis 3 m/s, bewegt werden, und/oder
iv) in Schritt b) gemäß Anspruch 8 zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) gemäß Anspruch 8 maximal 20 Sekunden, vorzugsweise maximal 10 Sekunden, insbesondere maximal 5 Sekunden, beträgt.

12. Verfahren gemäß einem der Ansprüche 1 bis 11, **dadurch gekennzeichnet, dass**
i) die mindestens eine dünnere thermoplastische Schaumstoffplatte (TS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 5 bis 100 mm, vorzugsweise von 5 bis 50 mm, aufweist, und/oder
ii) die mindestens eine dünnere Schaumstoffplatte (NS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 20 bis 200 mm, vorzugsweise von 40 bis 160 mm, aufweist, und/oder
iii) jede Metalldeckschicht eine Länge (x-Richtung) und eine Breite (y-Richtung) aufweist, die identisch ist mit den entsprechenden Werten der dünneren Schaumstoffplatte (NS), die Dicke (z-Richtung) jedoch 0,01 bis 0,1 mm, vorzugsweise 0,02 bis 0,06 mm, beträgt, und/oder
iv) jede dünnere thermoplastische Schaumstoffplatte (TS), jede dünnere Schaumstoffplatte (NS) und jede Metalldeckschicht identische Werte für die Länge (x-Richtung) und die Breite (y-Richtung) aufweisen.

13. Zumindest zweilagige Schaumstoffplatte erhältlich nach einem Verfahren gemäß einem der Ansprüche 1 bis 12.

14. Verwendung einer zumindest zweilagigen Schaumstoffplatte gemäß Anspruch 13 zur Wärmedämmung.

15. Zumindest zweilagige Schaumstoffplatte gemäß Anspruch 13, **dadurch gekennzeichnet, dass** zwischen der dünneren thermoplastischen Schaumstoffplatte (TS) und der dünneren Schaumstoffplatte (NS) eine Schweißnaht ausgebildet ist.

## Claims

1. A process for the production of an at least two-layer foam sheet via bonding of at least one thinner thermoplastic foam sheet (TS) and at least one thinner foam sheet (NS), where the thinner foam sheet (NS) has a metal outer layer on each of two opposite sides, and where the thinner thermoplastic foam sheet (TS) and the thinner foam sheet (NS) are bonded to one another in a manner such that in the at least two-layer foam sheet there is a metal outer layer between the thinner thermoplastic foam sheet (TS) and the thinner foam sheet (NS), and where the thinner thermoplastic foam sheet (TS) and the thinner foam sheet (NS) are bonded by thermal welding.

2. The process according to claim 1, wherein the thinner foam sheet (NS) is a thermoplastic foam sheet or a nonthermoplastic foam sheet, and the thinner foam sheet (NS) is preferably a nonthermoplastic foam sheet, more preferably a thermoset foam sheet, even more preferably a polyurethane foam sheet, especially a rigid polyurethane foam sheet.

3. The process according to claim 1 or 2, wherein at least one of the metal outer layers of the thinner foam sheet (NS) comprises aluminum,
i) preferably the thinner foam sheet (NS) has precisely two metal outer layers, both of which have been produced entirely from aluminum, and/or
ii) preferably the precisely two metal outer layers have respectively been applied on the two largest-area opposite sides of the thinner foam sheet (NS), and/or
iii) preferably a protective layer, in particular an epoxy resin protective layer, has been provided to at least one, more preferably each, of the sides of the thinner foam sheet (NS), that have no metal outer layer.

4. The process according to any of claims 1 to 3, wherein the thinner foam sheet (NS) comprises at least one blowing agent, which is preferably an aliphatic hydrocarbon or a halogenated hydrocarbon, the blowing agent in particular being selected from n-pentane, isopentane, cyclopentane, a fluorinated hydrocarbon, a chlorinated hydrocarbon and a halogenated alkene.

5. The process according to any of claims 1 to 4, wherein
i) the thermal conductivity λ of the thinner foam sheet (NS) is ≤ 0.030 W/(mK), preferably ≤ 0.025 W/(mK), in particular ≤ 0.020 W/(mK), and/or
ii) the thermal conductivity λ of the at least two-layer foam sheet is ≤ 0.035 W/(mK), preferably ≤ 0.030 W/(mK), in particular ≤ 0.025 W/(mK).

6. The process according to any of claims 1 to 5, wherein a three-layer foam sheet is produced via bonding of two thinner thermoplastic foam sheets (TS) and of one thinner foam sheet (NS) which has a metal outer layer on each of two opposite sides, where a thinner thermoplastic foam sheet (TS) is applied on each of the opposite sides of the thinner foam sheet (NS) to give the three-layer foam sheet, and between each thinner thermoplastic foam sheet (TS) and the thinner foam sheet (NS) there is in each case a metal outer layer.

7. The process according to claim 6, wherein a foam sheet having four or more layers is produced, where, starting from the three-layer foam sheet, a second thinner foam sheet (NS), which has a metal outer layer on each of two opposite sides, is applied to a side provided by a thinner thermoplastic foam sheet (TS) in the three-layer foam sheet, the resultant four-layer foam sheet has, in alternation, a total of four layers made of thinner thermoplastic foam sheets (TS) and of thinner foam sheets (NS), there is in each case a metal outer layer between a layer made of thinner thermoplastic foam sheet (TS) and a layer made of thinner foam sheet (NS), and the first and second thinner foam sheet (NS) are each present on one of the opposite sides of a thinner thermoplastic foam sheet (TS), where optionally alternating application of a further thinner thermoplastic foam sheet (TS) or of a thinner foam sheet (NS), which has a metal outer layer on each of two opposite sides, is repeated at least once in order to obtain foam sheets having a larger number of layers.

8. The process according to any of claims 1 to 7, wherein an at least two-layer foam sheet is produced by thermal welding, comprising the following steps a) to e):
a) a thinner thermoplastic foam sheet (TS) and a thinner foam sheet (NS) each having a metal outer layer on two opposite sides are aligned parallel to one another at a distance a such that they form an interspace and a metal outer layer of the thinner foam sheet (NS) is opposite the thinner thermoplastic foam sheet (TS),
b) at least two heating elements are introduced into the interspace in offset parallel planes and parallel to the two thinner foam sheets (TS) and (NS), with no mutual contact between the surfaces of the thinner thermoplastic foam sheet (TS), the metal outer layer of the thinner foam sheet (NS) and the heating elements,
c) the heating elements are introduced between the two thinner foam sheets (TS) and (NS) to such an extent that at least one of the heating elements was present at least temporarily between the two thinner foam sheets (TS) and (NS) based on any point on the respective surface of the two thinner foam sheets (TS) and (NS),
d) the heating elements are removed again completely from the interspace,
e) at least one of the two thinner foam sheets (TS) and (NS) is pressed against the surface of the respective other thinner foam sheet (TS) and (NS),
wherein, preferably, in step b), two heating elements are introduced into the interspace from respectively opposite directions and/or preferably two heating elements are removed again in step d) from the interspace in respectively opposite directions.

9. The process according to any of claims 1 to 8, wherein
i) the thinner thermoplastic foam sheet (TS) is a molded foam or an extruded foam based on at least one polymer selected from the group consisting of polystyrene, polystyrene copolymers, polyether sulfone, polysulfone, polyethylene terephthalate, thermoplastic polyurethane, polyolefins, polyolefin copolymers and acrylic polymers, preferably an extruded foam based on at least one polymer selected from the group consisting of polystyrene, polystyrene copolymers, polyether sulfone, polysulfone, thermoplastic polyurethane and polyethylene terephthalate, most preferably an extruded foam based on at least one polymer selected from the group consisting of polystyrene, polystyrene copolymers and polyethylene terephthalate, and/or
ii) the thinner foam sheet (NS) is a thermoset foam sheet which is obtained by converting a reactive mixture comprising at least one component (K1) and at least one component (K2), where component (K1) comprises at least one isocyanate and component (K2) is selected from at least one polyether polyol, a polyester polyol or a polyamine.

10. The process according to any of claims 1 to 9, wherein the thinner foam sheet (NS) is a thermoset polyurethane foam sheet which is obtained by converting a reactive mixture comprising, as component (K1), at least one isocyanate selected from toluene diisocyanate (TDI), diphenylmethane diisocyanate (MDI), polymeric diphenylmethane diisocyanates (PMDI) and mixtures thereof, and, as component (K2), at least one polyether polyol and/or at least one polyester polyol.

11. The process according to any of claims 1 to 10, wherein the bonding is effected by thermal welding and
i) a weld seam having a thickness of 30 to 200 µm, preferably of 50 to 150 µm, more preferably of 70 to 130 µm, especially of 80 to 100 µm, is formed, and/or
ii) two heating elements are used and/or the heating elements are heating plates, preferably IR radiators having a surface temperature of 200 to 1000°C, especially of 300 to 700°C, and/or
iii) the heating elements in steps b) and d) according to claim 8 are moved at a speed of 0.1 to 5 m/s, preferably of 0.3 to 3 m/s, and/or
iv) in step b) according to claim 8 two heating elements are introduced into the interspace from respectively opposite directions and two heating elements are removed again in step d) from the interspace in respectively opposite directions, and/or
v) the total duration of steps b) to e) according to claim 8 is not more than 20 seconds, preferably not more than 10 seconds, especially not more than 5 seconds.

12. The process according to any of claims 1 to 11, wherein
i) the length (x-direction) of the at least one thinner thermoplastic foam sheet (TS) is from 500 to 2800 mm, preferably from 1000 to 1500 mm, the width (y-direction) thereof is from 200 to 1250 mm, preferably from 500 to 900 mm, and the thickness (z-direction) thereof is from 5 to 100 mm, preferably from 5 to 50 mm, and/or
ii) the length (x-direction) of the at least one thinner foam sheet (NS) is from 500 to 2800 mm, preferably from 1000 to 1500 mm, the width (y-direction) thereof is from 200 to 1250 mm, preferably from 500 to 900 mm, and the thickness (z-direction) thereof is from 20 to 200 mm, preferably from 40 to 160 mm, and/or
iii) the length (x-direction) and the width (y-direction) of each metal outer layer is the same as the corresponding values of the thinner foam sheet (NS), but the thickness (z-direction) is from 0.01 to 0.1 mm, preferably from 0.02 to 0.06 mm, and/or
iv) values for the length (x-direction) and for the width (y-direction) are the same for each thinner thermoplastic foam sheet (TS), each thinner foam sheet (NS) and each metal outer layer.

13. An at least two-layer foam sheet obtainable by a process according to any of claims 1 to 12.

14. The use of an at least two-layer foam sheet according to claim 13 for thermal insulation.

15. An at least two-layer foam sheet according to claim 13, wherein a weld seam has been formed between the thinner thermoplastic foam sheet (TS) and the thinner foam sheet (NS).

## Revendications

1. Procédé de fabrication d'une plaque de mousse au moins bicouche par liaison d'au moins une plaque de mousse thermoplastique plus mince (TS) et d'au moins une plaque de mousse plus mince (NS), la plaque de mousse plus mince (NS) comprenant une couche de recouvrement métallique sur deux côtés opposés, et la plaque de mousse thermoplastique plus mince (TS) et la plaque de mousse plus mince (NS) étant reliées l'une avec l'autre de telle sorte qu'une couche de recouvrement métallique se trouve dans la plaque de mousse au moins bicouche entre la plaque de mousse thermoplastique plus mince (TS) et la plaque de mousse plus mince (NS), et la liaison de la plaque de mousse thermoplastique plus mince (TS) et de la plaque de mousse plus mince (NS) ayant lieu par soudage thermique.

2. Procédé selon la revendication 1, **caractérisé en ce que** la plaque de mousse plus mince (NS) est une plaque de mousse thermoplastique ou une plaque de mousse non thermoplastique, la plaque de mousse plus mince (NS) étant de préférence une plaque de mousse non thermoplastique, de manière davantage préférée une plaque de mousse duroplastique, de manière encore davantage préférée une plaque de mousse de polyuréthane, notamment une plaque de mousse dure de polyuréthane.

3. Procédé selon la revendication 1 ou 2, **caractérisé en ce qu'**au moins une des couches de recouvrement métallique de la plaque de mousse plus mince (NS) contient de l'aluminium,
i) la plaque de mousse plus mince (NS) comprenant de préférence exactement deux couches de recouvrement métallique, qui sont toutes les deux entièrement fabriquées d'aluminium, et/ou
ii) les exactement deux couches de recouvrement métalliques étant de préférence chacune appliquées sur les deux côtés de plus grande surface et opposés des plaques de mousse plus minces (NS), et/ou
iii) au moins un, de manière davantage préférée chacun, des côtés de la plaque de mousse plus mince (NS) qui ne comprennent pas de couche de recouvrement métallique étant de préférence muni d'une couche de protection, notamment d'une couche de protection en résine époxyde.

4. Procédé selon l'une quelconque des revendications 1 à 3, **caractérisé en ce que** la plaque de mousse plus mince (NS) contient au moins un agent gonflant, l'agent gonflant étant de préférence un hydrocarbure aliphatique ou un hydrocarbure halogéné, l'agent gonflant étant notamment choisi parmi le n-pentane, l'iso-pentane, le cyclopentane, un hydrocarbure fluoré, un hydrocarbure chlore ou un alcène halogéné.

5. Procédé selon l'une quelconque des revendications 1 à 4, **caractérisé en ce que**
i) la plaque de mousse plus mince (NS) présente une conductivité thermique λ ≤ 0,030 W/(mK), de préférence ≤ 0,025 W/(mK), notamment ≤ 0,020 W/(mK), et/ou
ii) la plaque de mousse au moins bicouche présente une conductivité thermique λ ≤ 0,035 W/(mK), de préférence ≤ 0,030 W/(mK), notamment ≤ 0,025 W/(mK).

6. Procédé selon l'une quelconque des revendications 1 à 5, **caractérisé en ce qu'**une plaque de mousse tricouche est fabriquée par liaison de deux plaques de mousse thermoplastiques plus minces (TS) et d'une plaque de mousse plus mince (NS) qui comprend une couche de recouvrement métallique sur deux côtés opposés, une plaque de mousse thermoplastique plus mince (TS) étant appliquée sur chaque côté opposé de la plaque de mousse plus mince (NS) pour obtenir la plaque de mousse tricouche, et une couche de recouvrement métallique se trouvant à chaque fois entre la plaque de mousse thermoplastique plus mince (TS) et la plaque de mousse plus mince (NS).

7. Procédé selon la revendication 6, **caractérisé en ce qu'**une plaque de mousse tétracouche ou d'un nombre de couches plus élevé est fabriquée ; à partir de la plaque de mousse tricouche, une deuxième plaque de mousse plus mince (NS) qui comprend une couche de recouvrement métallique sur deux côtés opposés étant appliquée sur un côté de la plaque de mousse tricouche provenant d'une plaque de mousse thermoplastique plus mince (TS), la plaque de mousse tétracouche obtenue présentant au total quatre couches alternées de plaques de mousse thermoplastique plus minces (TS) et de plaques de mousse plus minces (NS), une couche de recouvrement métallique se trouvant à chaque fois entre une couche de plaque de mousse thermoplastique plus mince (TS) et une couche de plaque de mousse plus mince (NS), et la première et la deuxième plaque de mousse plus mince (NS) se trouvant chacune sur un côté opposé d'une plaque de mousse thermoplastique plus mince (TS), l'application alternée d'une plaque de mousse thermoplastique plus mince (TS) supplémentaire ou d'une plaque de mousse plus mince (NS) qui comprend une couche de recouvrement métallique sur deux côtés opposés étant éventuellement répétée au moins une fois pour obtenir des plaques de mousse à nombre de couches plus élevé.

8. Procédé selon l'une quelconque des revendications 1 à 7, **caractérisé en ce qu'**une plaque de mousse au moins bicouche est fabriquée par soudage thermique, comprenant les étapes a) à e) suivantes :
a) une plaque de mousse thermoplastique plus mince (TS) et une plaque de mousse plus mince (NS) qui comprend une couche de recouvrement métallique sur deux côtés opposés sont orientées en parallèle l'une à l'autre à un écart a, de manière à former un espace intermédiaire et de manière à ce qu'une couche de recouvrement métallique de la plaque de mousse plus mince (NS) soit opposée à la plaque de mousse thermoplastique plus mince (TS),
b) au moins deux éléments chauffants sont introduits dans l'espace intermédiaire dans des plans parallèles les uns aux autres et parallèles aux deux plaques de mousse plus minces (TS) et (NS), les surfaces de la plaque de mousse thermoplastique plus mince (TS), la couche de recouvrement métallique de la plaque de mousse plus mince (NS) et les éléments chauffants n'étant pas en contact mutuel,
c) les éléments chauffants sont introduits à une distance telle entre les deux plaques de mousse plus minces (TS) et (NS) qu'au moins un des éléments chauffants se trouve au moins temporairement entre les deux plaques de mousse plus minces (TS) et (NS), par rapport à chaque emplacement de la surface respective des deux plaques de mousse plus minces (TS) et (NS),
d) les éléments chauffants sont entièrement retirés de l'espace intermédiaire,
e) au moins une des deux plaques de mousse plus minces (TS) et (NS) est pressée contre la surface de l'autre plaque de mousse plus mince (TS) et (NS),
deux éléments chauffants étant de préférence introduits dans l'espace intermédiaire à l'étape b) à partir de directions opposées l'une à l'autre et/ou deux éléments chauffants étant de préférence retirés de l'espace intermédiaire à l'étape d) dans des directions opposées l'une à l'autre.

9. Procédé selon l'une quelconque des revendications 1 à 8, **caractérisé en ce que**
i) la plaque de mousse thermoplastique plus mince (TS) est une mousse particulaire ou une mousse extrudée à base d'au moins un polymère, choisi dans le groupe constitué par le polystyrène, les copolymères de polystyrène, la polyéther-sulfone, la polysulfone, le polyéthylène téréphtalate, le polyuréthane thermoplastique, les polyoléfines, les copolymères de polyoléfine et les polymères acryliques, de préférence une mousse extrudée à base d'au moins un polymère choisi dans le groupe constitué par le polystyrène, les copolymères de polystyrène, la polyéther-sulfone, la polysulfone, le polyuréthane thermoplastique et le polyéthylène téréphtalate, de manière préférée entre toutes une mousse extrudée à base d'au moins un polymère choisi dans le groupe constitué par le polystyrène, les copolymères de polystyrène et le polyéthylène téréphtalate, et/ou
ii) la plaque de mousse plus mince (NS) est une plaque de mousse duroplastique, qui est obtenue par mise en réaction d'un mélange réactif contenant au moins un composant (K1) et au moins un composant (K2), le composant (K1) comprenant au moins un isocyanate et le composant (K2) étant choisi parmi au moins un polyéther-polyol, un polyester-polyol ou une polyamine.

10. Procédé selon l'une quelconque des revendications 1 à 9, **caractérisé en ce que** la plaque de mousse plus mince (NS) est une plaque de mousse de polyuréthane duroplastique, qui est obtenue par mise en réaction d'un mélange réactif contenant en tant que composant (K1) au moins un isocyanate choisi parmi le diisocyanate de toluène (TDI), le diisocyanate de diphénylméthane (MDI), les diisocyanates de diphénylméthane polymères (PMDI) et leurs mélanges, et en tant que composant (K2) au moins un polyéther-polyol et/ou au moins un polyester-polyol.

11. Procédé selon l'une quelconque des revendications 1 à 10, **caractérisé en ce que** la liaison a lieu par soudage thermique, et
i) un joint de soudure d'une épaisseur de 30 à 200 µm, de préférence de 50 à 150 µm, de manière davantage préférée de 70 à 130 µm, notamment de 80 à 100 µm, est formé et/ou
ii) deux éléments chauffants sont utilisés et/ou les éléments chauffants sont des plaques chauffantes, de préférence des émetteurs IR ayant une température de surface de 200 à 1 000 °C, notamment de 300 à 700 °C, et/ou
iii) les éléments chauffants sont déplacés aux étapes b) et d) selon la revendication 8 à une vitesse de 0,1 à 5 m/s, de préférence de 0,3 à 3 m/s, et/ou
iv) à l'étape b) selon la revendication 8, deux éléments chauffants sont introduits dans l'espace intermédiaire à partir de directions opposées l'une à l'autre et, à l'étape d), deux éléments chauffants sont retirés de l'espace intermédiaire dans des directions opposées l'une à l'autre, et/ou
v) la durée totale des étapes b) à e) selon la revendication 8 est d'au plus 20 secondes, de préférence d'au plus 10 secondes, notamment d'au plus 5 secondes.

12. Procédé selon l'une quelconque des revendications 1 à 11, **caractérisé en ce que**
i) ladite au moins une plaque de mousse thermoplastique plus mince (TS) présente une longueur (direction x) de 500 à 2 800 mm, de préférence de 1 000 à 1 500 mm, une largeur (direction y) de 200 à 1 250 mm, de préférence de 500 à 900 mm, et une épaisseur (direction z) de 5 à 100 mm, de préférence de 5 à 50 mm, et/ou
ii) ladite au moins une plaque de mousse plus mince (NS) présente une longueur (direction x) de 500 à 2 800 mm, de préférence de 1 000 à 1 500 mm, une largeur (direction y) de 200 à 1 250 mm, de préférence de 500 à 900 mm, et une épaisseur (direction z) de 20 à 200 mm, de préférence de 40 à 160 mm, et/ou
iii) chaque couche de recouvrement métallique présente une longueur (direction x) et une largeur (direction y) qui sont identiques aux valeurs correspondantes de la plaque de mousse plus mince (NS), l'épaisseur (direction z) étant toutefois de 0,01 à 0,1 mm, de préférence de 0,02 à 0,06 mm, et/ou
iv) chaque plaque de mousse thermoplastique plus mince (TS), chaque plaque de mousse plus mince (NS) et chaque couche de recouvrement métallique présentent des valeurs identiques pour la longueur (direction x) et la largeur (direction y).

13. Plaque de mousse au moins bicouche pouvant être obtenue par un procédé selon l'une quelconque des revendications 1 à 12.

14. Utilisation d'une plaque de mousse au moins bicouche selon la revendication 13 pour l'isolation thermique.

15. Plaque de mousse au moins bicouche selon la revendication 13, **caractérisée en ce qu'**un joint de soudure est formé entre la plaque de mousse thermoplastique plus mince (TS) et la plaque de mousse plus mince (NS).
